# EUROPEAN PATENT APPLICATION

(11) **EP 0 955 748 A2**
(43) Date of publication of application: **10.11.1999**
(21) Application number: 99302750.7
(22) Date of filing: 08.04.1999
(51) Int. Cl.: H04L 12/56, H04Q 11/04

(54) **Scheduling method for input-buffer switch architecture**

(30) Priority: 09.04.1998 US 57526
(71) Applicant: NORTEL NETWORKS CORPORATION, Montreal, Quebec H2Y 3Y4 (CA)
(72) Inventor: Langevin, Michel, Nepean, Ontario K2G 3R7 (CA); Fisher, David Anthony, Kanata, Ontario K2K 2L4 (CA)
(74) Representative: Berkson, Michael David

(57) **Abstract**

A method of scheduling in a switch for transferring data by information units is provided where the scheduling decisions are performed from the destination node point of view, considering the demand of all the source nodes to reach this destination node. This algorithm also allows an improvement in performance, from a traffic point of view, of a rotator switch, since the algorithm is much more fair than the known source based scheduling algorithm in sharing the bandwidth amongst the contenting source nodes for a given destination node. Embodiments of the invention, are extended to support class of service, including minimum bandwidth guarantee. Further embodiments are provided that support age-group to further increase the performance of a rotator switch fabric with respect to traffic. In still further embodiments the algorithm is extended in a load-shared architecture to make it fault tolerant.

## Description

### Field of the invention

The present invention relates to scheduling algorithms, and their implementations, for routing data in information units through an input-buffer switch architecture having an internally non-blocking switch fabric. The present invention is particularly concerned with scheduling algorithms for rotator switch architectures, yet can be used as well for demand-driven space switch architectures.

### Related Applications

The present invention is related to copending application entitled "ROTATOR SWITCH DATA PATH STRUCTURES" filed on the same day with the same inventors and assignee as the present invention, and the entire specification thereof is incorporated by reference herein.

### Background of the invention

The present invention concerns the scheduling of ATM cells, or more generally, the scheduling of any fixed-size Information Unit (IU), to be routed through a switch fabric of an input-buffer switch (in particular, an ATM input-buffer switch).

An input-buffer switch is composed of a set of N Ingress nodes, a switch fabric, and a set of N Egress nodes. In the following, the Ingress nodes and Egress nodes are named source nodes and destination nodes, respectively. The basic characteristic of this architecture is that IUs are queued in the source nodes before being routed via the switch fabric to the destination nodes.

The present application considers a switch fabric architecture being internally non-blocking; that is, a switch fabric architecture supporting all the possible one-to-one connection mappings between the source nodes and the destination nodes. Each one-to-one connection mapping supports a connection between each source node and a distinct destination node, or equally between each destination node and a distinct source node. There are N! possible one-to-one connection mapping for the case of a switch fabric with N source nodes and N destination nodes.

The capacity of all connections of each one-to-one connection mapping are the same. That capacity is either the same as the source node (or equally the same as the destination node), or slightly higher than the capacity of the destination node. We suppose, however, that the capacity of the connection is less than N times the capacity of the destination nodes, otherwise no input-buffer would be needed at the source nodes, and the architecture will be logically equivalent to an output-buffer switch architecture.

Since the aggregate capacity at which IUs can arrive at the source nodes for the same destination nodes can be much higher than the supported connection capacity of the switch fabric, input buffers are required at the source nodes in order to queue IUs when there is output contention at a destination node.

An algorithm is thus needed to decide the sequence of one-to-one connection mapping status of the switch fabric, or equally, to inform each source node about the destination node it is currently connected with and thus for which it can send IUs through the switch fabric. That algorithm is named scheduling algorithm, since it schedules the flow of IUs from the source nodes to the destination nodes.

A particular implementation of the switch fabric is a demand-driven space switch architecture. For each one-to-one connection mapping, a demand-driven space switch supports at the same time all the connection of the mapping.

Another particular implementation of the switch fabric is a rotator space switch architecture in which all connection of a one-to-one mapping are established one after the other, following a rotation principle. The rotator architecture is logically composed of many small demand-driven space switches, named tandem nodes, each permitting at a given time a one-to-one connection mapping between a set of source nodes and a set of destination nodes. A tandem node is connected with all the source nodes following a rotation scheme and, similarly, with all the destination nodes following a rotation scheme as well. Each tandem contains a fixed number of IU buffers in order to "transport" the IUs from the source nodes to the destination nodes. The rotator switch architecture was patented December 1, 1992, in U.S. Patent No. 5,168,492, by M. E. Beshai and E. A. Munter and an improvement of the data paths thereof has been applied for in copending patent application filed on the same day as the present application by the same inventors and having the same assignee.

A scheduling method, namely the source-based scheduling (SBS), was included in the patent for the original rotator architecture by Beshai et al. In that method, the scheduling decisions are performed logically by each source node, without considering the queue status of the other source nodes. For each tandem node, each source node, one after the other, selects the destination node to which it will send an IU using that tandem node, and it thus seizes on that tandem node the IU buffer associated with the selected destination node. Hence, the destination node must be selected from those not yet already selected during the current rotation of the tandem node.

However, there is a problem of fairness related with that method. In the original proposal of the rotator architecture, the tandem IU buffers are emptied one after the other. That is, the tandem node frees its IU buffers in a fixed order, corresponding to the order it is connected with the destination nodes. The tandem node is connected with the source nodes following as well a fixed order. Hence, when an source node is considering a tandem node for transferring an IU to a given destination node, the probability of finding a free IU buffer associated with that destination node is not the same as for the other destination node; the more recently the IU buffer has been emptied, the more likely the source node will see a free IU buffer associated with the destination node. This means that under output contention for a destination node, the source node furthest from to this destination node has the freedom to use as much of the bandwidth available to reach this destination node, while the source node closest to this destination node sees only the bandwidth not used by the preceding source nodes. Under severe output contention, the closest source node may never see available bandwidth to reach this destination node, while the furthest source node can reach the destination node as if there was no contention at all. This is unfair.

### Summary of the invention

According to an aspect of the present invention there is provided a method of scheduling wherein the scheduling decisions are performed from the destination node point of view, considering the demand of all the source nodes to reach this destination node. This algorithm allows an improvement in performance, from a traffic point of view, of the rotator switch, since the algorithm is much more fair then the original SBS algorithm to share the bandwidth amongst the contenting source nodes for a given destination node.

According to another aspect of the present invention there is provided in a switch for transferring information units and having a plurality of source nodes and destination nodes and selectable connectivity therebetween, a method of scheduling transfer of an information unit from a source node via a shared link to a desired destination node, said method comprising the steps of determining availability of a destination node, determining demand for connection from each source node to the destination node, determining availability of each source node, and selecting an available source node in dependence upon the availability of and demand for the destination node.

According to another aspect of the present invention there is provided in a switch for transferring information units and having a plurality of source nodes and destination nodes and selectable connectivity therebetween, a method of scheduling transfer of an information unit from a source node via a shared link to a desired destination node, said method comprising the steps of determining availability of a destination node, determining a class of traffic being scheduled, determining demand for connection from each source node to the destination node to the destination node, determining availability of each source node, and
selecting an available source node in dependence upon the availability of and demand for the destination node and the class of traffic.

According to another aspect of the present invention there is provided in a switch for transferring information units and having a plurality of source nodes and destination nodes and selectable connectivity therebetween, a method of scheduling transfer of an information unit from a source node via a shared link to a desired destination node, said method comprising the steps of determining availability of a destination node, determining age of traffic being scheduled, determining demand for connection from each source node to the destination node, determining availability of each source node, and selecting an available source node in dependence upon the availability of and demand for the destination node and age of traffic.

According to another aspect of the present invention there is provided in a rotator switch for transferring information units and having a plurality of source node, double-bank tandem nodes and destination nodes and selectable connectivity therebetween, a method of scheduling transfer of an information unit from a source node to a tandem node associated with a desired destination node, said method comprising the steps of determining availability of a tandem associated with a destination node, determining demand for connection from each source node via the tandem node to the destination node, determining availability of each source node, and selecting an available source node in dependence upon the availability of the tandem node and demand for the destination node.

According to another aspect of the present invention there is provided in a switch for transferring information units and having a plurality of source node, double-bank tandem nodes and destination nodes and selectable connectivity therebetween, a method of scheduling transfer of an information unit from a source node to a tandem node associated with a desired destination node, said method comprising the steps of determining availability of a tandem node associated with a destination node, determining a class of traffic being scheduled, determining demand for connection from each source node via the tandem node to the destination node, determining availability of each source node, and selecting an available source node in dependence upon the availability of the tandem node, demand for the destination node and the class of traffic.

According to another aspect of the present invention there is provided in a switch for transferring information units and having a plurality of source node, double-bank tandem nodes and destination nodes and selectable connectivity therebetween, a method of scheduling transfer of an information unit from a source node to a tandem node associated with a desired destination node, said method comprising the steps of determining an age group of traffic being scheduled, determining demand for connection from each source node via the tandem node to the destination node, determining availability of each source node, determining availability of a tandem node associated with a destination node, and
selecting a source node in dependence upon availability of the tandem node, demand for the destination node and the age group.

According to another aspect of the present invention there is provided in a rotator rotator switch for transferring information units and having a plurality of source node, tandem nodes and destination nodes and selectable connectivity therebetween, a method of scheduling transfer of an information unit from a source node to a tandem node associated with a desired destination node, said method comprising the steps of determining availability of a tandem associated with a destination node, determining demand for connection from each source node via the tandem node to the destination node, determining availability of each source node; and selecting an available source node in dependence upon the availability of the tandem node and demand for the destination node.

According to another aspect of the present invention there is provided in a rotator switch for transferring information units and having a plurality of source node, tandem nodes and destination nodes and selectable connectivity therebetween, a method of scheduling transfer of an information unit from a source node to a tandem node associated with a desired destination node, said method comprising the steps of determining availability of a tandem node associated with a destination node, determining a class of traffic being scheduled, determining demand for connection from each source node via the tandem node to the destination node, determining availability of each source node, and selecting an available source node in dependence upon the availability of the tandem node, demand for the destination node and the class of traffic.

According to another aspect of the present invention there is provided in a rotator rotator switch for transferring information units and having a plurality of source node, tandem nodes and destination nodes and selectable connectivity therebetween, a method of scheduling transfer of an information unit from a source node to a tandem node associated with a desired destination node, said method comprising the steps of determining an age group of traffic being scheduled, determining demand for connection from each source node via the tandem node to the destination node, determining availability of each source node, determining availability of a tandem node associated with a destination node, and selecting a source node in dependence upon availability of the tandem node, demand for the destination node and the age group.

In embodiments of the invention, the algorithm is extended to support class of service, including minimum bandwidth guarantee. Further embodiments are provided that support age-group to further increase the performance of a rotator switch fabric with respect to traffic. In still further embodiments the algorithm is extended in a load-share architecture to make it fault tolerant. Further embodiments extend the algorithm for supporting the improvements of the rotator data-path architecture proposed in the co-pending application referenced herein above. A further embodiment applies the algorithm for a pure demand driven space switch architecture. A further embodiment extends the algorithm to provide fault tolerance in the switch fabric.

### Brief Description of the Drawings

The present invention will be further understood from the following detailed description, with reference to the drawings in which:
Fig. 1 illustrates a known rotator switch for transferring data in information units;
Fig. 2 illustrates the data flow inside the known rotator switch of Fig. 1;
Fig. 3 illustrates a circular representation of the known rotator switch of Fig. 1;
Fig. 4 illustrates the functional structure of the destination-based scheduling algorithm for an input-buffer switch.
Fig. 5 illustrates a distributed implementation of the destination-based scheduling algorithm in accordance with a second embodiment of the present invention for the known rotator switch of Fig. 1;
Fig. 6 illustrates a centralised implementation of the destination-based scheduling algorithm in accordance with a third embodiment of the present invention for the known rotator switch of Fig. 1;
Fig. 7 illustrates a partitioning for the centralised implementation of the destination-based scheduling algorithm of Fig. 6 in accordance with a fourth embodiment of the present invention for the known rotator switch of Fig. 1;
Fig. 8 illustrates a load-sharing implementation of the destination-based scheduling algorithm in accordance with a fifth embodiment of the present invention for the known rotator switch of Fig. 1;
Fig. 9 illustrates an extension of the known rotator switch of Fig. 1 using compound-tandem nodes;
Fig. 10 illustrates an extension of the known rotator switch of Fig. 1 using parallel rotator slices;
Fig. 11 illustrates an extension of the known rotator switch of Fig. 1 using both compound-tandem nodes and parallel rotator slices;
Fig. 12 illustrates an extension of the known rotator switch of Fig. 1 using double-bank tandem nodes.

### Abbreviations

DBS: Destination-Based Scheduler (or Scheduling)
GM: Grant Manager
IU: Information Unit (fixed size, e.g., 64 Byte)
RM: Request Manager
TDB: Tandem-Destination Buffer (IU size)

### Detailed Description

The principles of the Destination-Based Scheduling (DBS) algorithm are first described in the context of the known rotator switch architecture. Then, the algorithm is extended for various architectures, up to a pure demand-driven space switch architecture.

### A. DBS Algorithm for the known rotator switch architecture

### A.1 Basic DBS algorithm principles

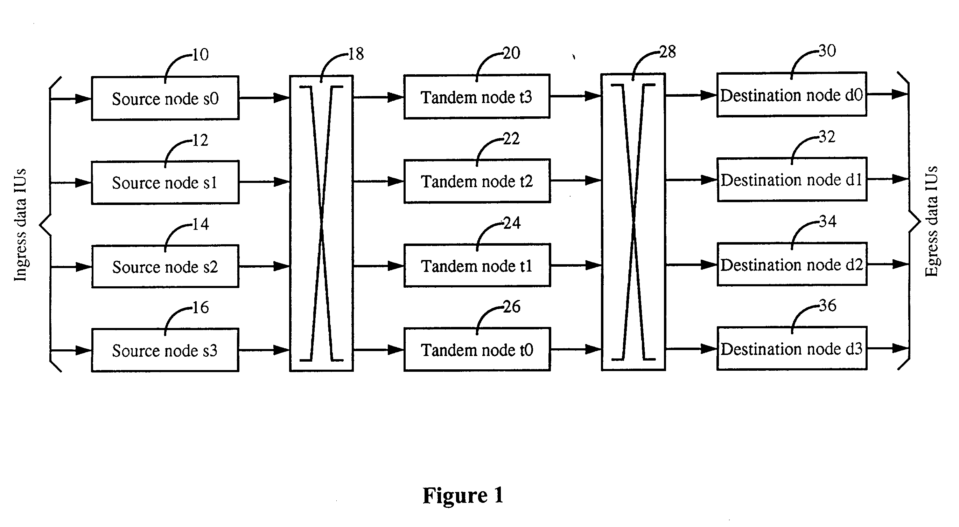

Referring to Fig. 1 there is illustrated a 4-node configuration of the known rotator switch for transferring data in Information Units (IUs). The rotator switch includes four (input) source nodes 10-16, a first commutator 18, four (intermediate) tandem nodes 20-26, a second commutator 28, and four (output) destination nodes 30-36. Each commutator 18 and 28 is a specific 4-by-4 space-switch in which the connection matrix status is restricted to follow a predefined pattern that mimics a rotation scheme.

In operation, the Ingress data enters the switch via the source nodes using a fixed size Information Unit (IU) format. An IU is similar to an ATM cell, but it contains two mandatory fields in the header the destination node address of the IU, and the class of service related with the IU (class are discussed later). The IUs are queued per destination address (and class) in the source nodes, waiting for places on the tandem nodes to be routed to the target destination nodes. Queuing by destination in the source node avoids the problem known as head-of-line blocking. The deterministic sequence of space-switch connections guarantees the correct ordering of IUs arriving at the destination nodes. Finally, the destination nodes forward as Egress data the IUs received from the source nodes via the tandem nodes.

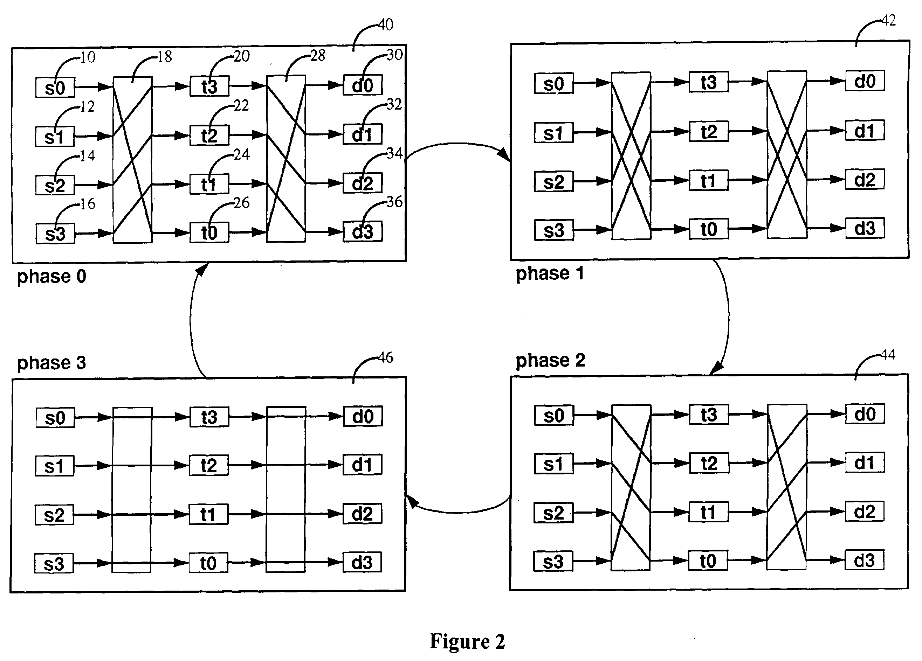

Referring to Fig. 2 there is illustrated the sequence of four phases composing the rotation scheme of the known rotator switch illustrated in Fig. 1; these phases are referred as phase 0, 40; phase 1, 42; phase 2, 44; and phase 3, 46. At each phase of the rotation, a tandem node is connected with exactly one source node and with exactly one destination node, all tandem nodes being connected with different source nodes, and with different destination nodes. Similarly, a source node is connected with exactly one tandem node, all source nodes being connected with different tandem nodes, and a destination node is connected with exactly one tandem node, all destination nodes being connected with different tandem nodes.

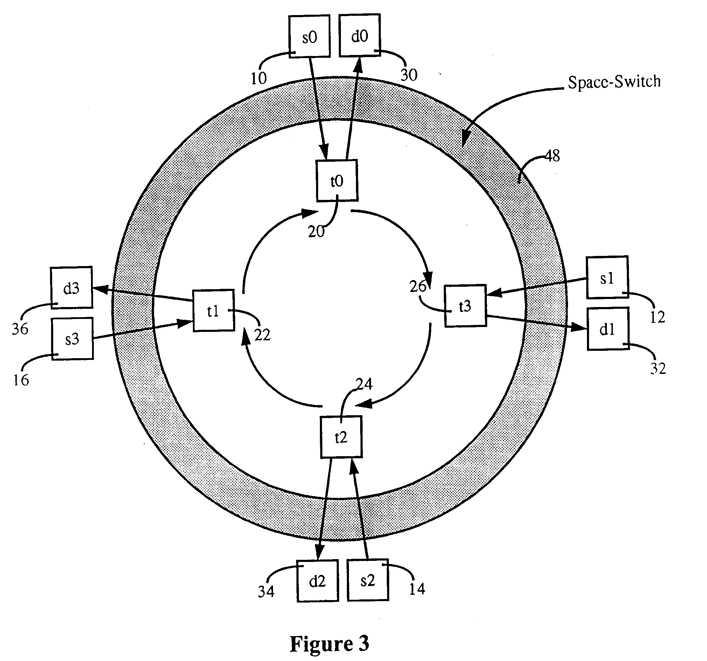

Referring to Fig. 3 there is illustrated a circular representation of the known rotator data flow corresponding to the phase 0 connectivity presented in Fig. 2. The three other phases, phase 1, phase 2, and phase 3, are obtained by turning clockwise the internal disk containing the tandem nodes in the middle of the figure, the rotating effect being physically obtained by reconfiguring deterministically the space-switch 48, that implements both space switches 18, 28 of Fig. 1. During a rotation, each tandem node is connected with all source nodes, one source node after the other, and with all destination nodes, one destination node after the other. The sequence of connections is the same at each rotation.

During a phase, a tandem node can accept one IU from the connected source node, and can transfer one IU to the connected destination node. In general, K IUs could be transferred during a phase, as discussed below.

Each tandem node can buffer one IU for each destination node. The IU for one destination node is stored in a buffer, named Tandem-Destination-Buffer (TDB), associated with this destination node. There are four TDBs per tandem, one associated with each destination node. When a tandem node is connected with a destination node, the IU on the tandem node, in the TDB associated with this destination node, is transferred to this destination node; then, the TDB is freed.

It is useful to define the sequence of rotation of the tandem nodes using the destination nodes and the source nodes as reference point.

With respect to a given destination node, a tandem node terminates a rotation when it is connected with this destination node. That is, a tandem node starts a new rotation with respect to a destination node the phase after emptying the TDB associated with this destination node.

With respect to a given source node, a tandem node terminates a rotation when it is connected with this source node. That is, a tandem node starts a new rotation with respect to a source node the phase after receiving an IU from this source node.

The scheduling algorithm is the process of deciding the destination node associated with the IU provided by each source node to the connected tandem node at each phase of the rotation. This process is equivalent to assigning a source node associated with the IU provided by each tandem node to the connected destination node at each phase of the rotation. The algorithm must satisfy two constraints related with the IU data flow through the rotator:
1) During each rotation of a tandem node with respect to a given destination node, this tandem node can accept at most one IU for this destination node, regardless of the source node providing the IU.
2) During each rotation of a tandem node with respect to a given source node, a source node can provide only one IU to the tandem node, regardless of the destination node associated with the provided IU.

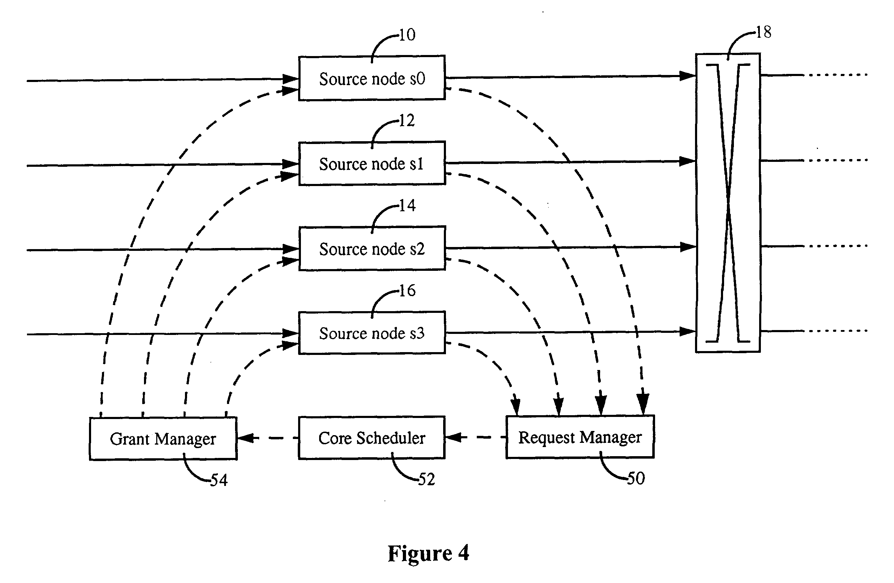

Referring to Fig. 4 there is illustrated the functional partitioning of the scheduling algorithm for a rotator switch in accordance with an embodiment of the present invention. The algorithm is composed of three specific modules:
1) Request Manager 50: the purpose of the request manager 50 is to inform the scheduler about the queue-fill status of the source nodes, the queue-fill status being the number of IUs queued by each source node for each destination node. We assume in the following that a communication path exists from the source nodes to the scheduler. Using this path, each source node can forward, as requests, to the request manager, the information about the IU arrivals at this source node.
2) Core Scheduler 52: the core scheduler 52 is the module implementing the process of deciding which source nodes have provided the IUs arriving at each destination node from its connected tandem node at each phase of the rotator. The scheduling decisions are based on the queue-fill status of the source nodes provided by the request manager, and they must satisfy the two above scheduling constraints. The scheduling decisions are then forwarded to the grant manager.
3) Grant Manager 54: the purpose of the grant manager 54 is to inform the source nodes about the scheduling decisions. We assume in the following that a communication path exists from the scheduler back to the source nodes. For each rotator phase, 40, 42, 44, 46 each source node must receive a grant from the grant manager, that specifies to the source node for which destination node this source node must provide an IU to the connected tandem node.

The core of the scheduling algorithm must be optimised from a traffic performance point of view, the best achievable traffic performance of the rotator switch architecture being the one achievable by an output buffer switch architecture. For this optimal switch architecture, the order in which IUs arrive at a destination node corresponds to the order in which IUs have entered the switch, regardless of which source nodes the IUs effectively arrived from.

The destination-based scheduling (DBS) algorithm presented herein is devised to optimise the IU data flow through the rotator switch such that the traffic performance approximates that achieved by an output buffer switch architecture. The basic principle of the algorithm is that the destination node selects the source node that will use the destination-buffer associated with this destination node, on each tandem node and for each rotation.

For each rotation of a tandem node with respect to a given destination node, the DBS algorithm reserves (or allocates) to a source node the TDB associated with this destination node. This decision must be completed before the tandem node starts the rotation with respect to the destination node, and the reservation will be consumed by the source node during this rotation of the tandem with respect to the destination node.

Therefore, at each phase of the rotation, one TDB on each tandem node can be reserved for a source node, one for each destination node. The process of reserving a TDB for a source node is called a **source-selection**.

From a destination node point of view, a source-selection is completed at each phase, one on each tandem node, one tandem node after the other. Since a source-selection is performed only once per rotation on a given tandem node for a given destination node, the above scheduling constraint 1 is satisfied.

From a tandem node point of view, a source-selection is completed at each phase, one for each destination node, one destination node after the other. To satisfy the above scheduling constraint 2, it is sufficient to select a source node that is not yet selected to send an IU on this tandem node for the current rotation of this tandem node with respect to this source node. At each phase of the rotation, the tandem node starts a new rotation with respect to a source node, one source node after the other. At this reference point, the source node can be considered as eligible to send an IU to this tandem node, regardless of the destination node; the source node is eligible until its selection by a destination node.

In summary, the basic DBS algorithm principles are the following: During each rotator phase,
1) Each source node becomes eligible to use the tandem node connected with for the next rotation of this tandem node with respect to this source node;
2) Each destination node selects an eligible source node on the connected tandem node to send on this tandem node an IU for this destination node during the next rotation of this tandem node with respect to this destination node. The selected source node is no longer eligible to be selected on this tandem node for the remainder of its rotation with respect to this source node.

### A.1.1 Basic parameters

N: number of source nodes, number of destination nodes, number of tandem nodes, or number of rotator phases. In the above example related with Fig. 1, N is 4.
K: number of IUs transferred per phase, from each source node to the connected tandem node, as well as from each tandem node to the connected destination node. In the example related with Fig. 1 discussed previously, K = 1 was assumed.

In general, a source node can transfer K IUs to the connected tandem node at each phase, and a destination node can received K IUs from the connected tandem node at each phase. Thus, there is NK TDBs per tandem node, K TDBs associated with each destination node. When a tandem node is connected with a destination node, the IUs on this tandem node, in the K TDBs associated with this destination node, are transferred to this destination node, in the order they arrived at the tandem node; then, the K TDBs are freed.

The two generalised constraints to be satisfied by the scheduling algorithm become:
1) During each rotation of a tandem node with respect to a given destination node, this tandem node can accept at most K IUs for this destination node, regardless of the source nodes providing the IUs.
2) During each rotation of a tandem node with respect to a given source node, this source node can provide at most K IUs to the tandem node, regardless of the destination nodes associated with the IUs.

### A.1.2 Basic notation

The source nodes are numbered 0, 1, ..., N-1.
The destination nodes are numbered 0, 1, ..., N-1.
The tandem nodes are numbered 0,1, ..., N-1.
The rotator phases are numbered 0,1, ..., N-1.
ST(p,z): the source node connected with tandem node z during rotator phase p.
DT(p,z): the destination node connected with tandem node z during rotator phase p.
Q(x,y): the Queue-fill status of source node x for destination node y. On one hand, the value Q(x,y) is increased by the information forwarded by the request manager given the number of IU arrivals at source node x for destination node y, since the last update. The request manager provides this information at each period RP (request period) for each source-destination node combination.
TDS(y,z): the Tandem-Destination-Status (TDS) for destination node y on tandem node z. TDS(y,z) corresponds to the number of IUs the destination node y is already scheduled to receive from tandem node z during the current rotation of z with respect to destination y. This value is updated during scheduling to guarantee that the above scheduling constraint 1 is satisfied.
TSS(x,z): the Tandern-Source-Status (TSS) for source node x on tandem node z. TSS(x,z) corresponds to the number of IUs the source node x is already scheduled to send on tandem node z during the current rotation of z with respect to the source node x. This value is updated during scheduling to guarantee that the scheduling constraint 2 above is satisfied.

### A.1.3 Basic DBS algorithm

The basic DBS algorithm consists in making K source-selections at each phase for each destination node, the source-selections being performed on the tandem node connected with the destination node. The core scheduler of the DBS algorithm is presented below as a function DBS_1 (line 0 to line 15); this function is executed at each phase p of the rotator.

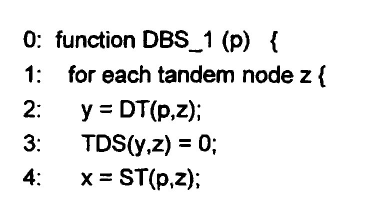

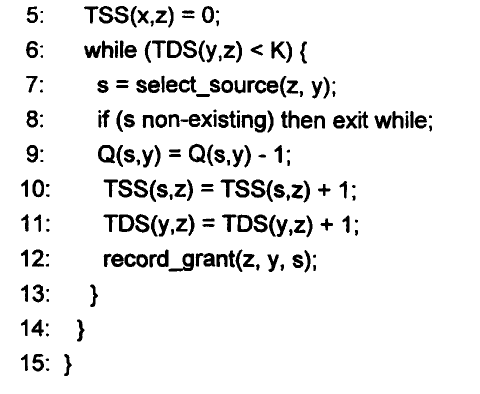

For each rotator-phase, source-selections are computed on each tandem node (line 1 to line 14). For each tandem node z, the source-selections are made for the destination node y connected with this tandem node (line 2); before making the source-selections for the destination node y, the TDBs on the tandem node z associated with this destination node become available; thus, the associated TDS value is reset (line 3). Since the tandem node z starts a new rotation with respect to the source node x (line 4), the reservation status of this source node on this tandem node is reset (line 5).

Then, up to K source-selections are completed for destination node y on tandem node z (line 6 to line 13); the source-selections are completed one at a time, using the function select_source which return the selected source node s (line 7). There exists different schemes to select the source node, ranging from random selection to pure round-robin selection, as discussed below.

If no source node s is selected, then the source-selections for the destination node y on the tandem node z are terminated (line 8). Otherwise, the data structures are updated in accordance with the selected source node (line 9 to line 12): the queue-fill status of the selected source node s for the destination node y is decremented (line 9); the reservation status for the selected source node s on the tandem node z is incremented (line 10); the reservation status of the destination node y on the tandem node z in incremented (line 11); finally, the grant information corresponding with the selection of source node s for destination node y on tandem z is forwarded to the grant manager; the recording of the grant by the grant manager is performed by the function record_grant (line 12).

As discussed above, there are many possible ways to select a source node, for a given destination node on a given tandem node; the only requirement of the function is to guarantee that the above scheduling constraints 1 and 2 are satisfied. The constraint 1 is automatically satisfied given the select_source function is called only when TDS(z)y is smaller than K; to satisfy constraint 2, it is sufficient to select a source node s such that TSS(z)s is smaller than K.

A round-robin implementation of the select_source function is presented below (line 0 to line 8). One round-robin pointer is used per destination node, LSS(y), which record the Last-Selected Source for destination node y (regardless of the tandem node).

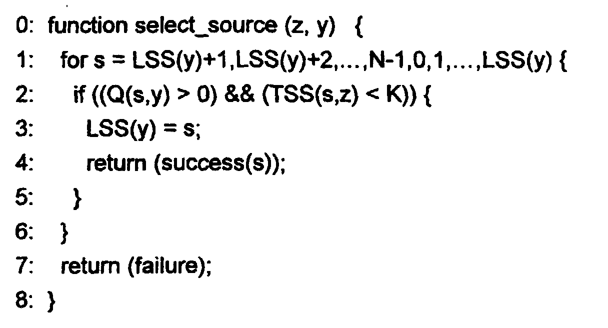

The round-robin selection is implemented by considering all the source nodes, in the increasing order, starting after the last selected source (line 1 to line 6). A source node s is a candidate for destination node y on tandem node z if TSS(x,z) is smaller than K, and if Q(x,y) is greater than 0; the selected source node is the first candidate considered following the round-robin order. If such a source node s exist (line 2), the value of the round-robin pointer for destination node y is set to s (line 3), and s is successfully returned by the function select_source (line 4). Otherwise, no source node is selected, and the function select_source returns a failure (line 7).

Many variants of the select_source function are possible, such as:
1) Considering the source nodes either in increasing order or in decreasing order, setting randomly the round-robin pointer each time the order is reversed;
2) Considering the source nodes following a completely random order.

Referring again to Fig. 2, the relationships between the scheduling decisions and the IU data flow with respect to tandem node t0 are as follows:

At phase 0, 40:
1) s0 sends an IU to t0, the IU being dequeued from the queue associated with the destination node (including d0 itself) by which s0 was selected during the current rotation of t0 with respect to s0; thus, t0 will start a new rotation with respect to s0.
2) t0 sends the IU for d0 the IU was received from a source node (including s0 itself) that was previously selected by d0 during the current rotation of t0 with respect to d0; thus, t0 will start a new rotation with respect to d0.
3) The scheduler selects a source node to send an IU on t0 for d0 during the next rotation of t0 with respect to d0.

At phase 1, 42:
1) s1 sends an IU to t0; thus, t0 will start a new rotation with respect to s1.
2) t0 sends the IU for d1; thus, t0 will start a new rotation with respect to d1.
3) The scheduler selects a source node to send an IU on t0 for d1 during the next rotation of t0 with respect to d1.

At phase 2, 44:
1) s2 sends an IU to t0; thus, t0 will start a new rotation with respect to s2.
2) t0 sends the IU for d2; thus, t0 will start a new rotation with respect to d2.
3) The scheduler selects a source node to send an IU on t0 for d2 during the next rotation of t0 with respect to d2.

At phase 3, 46:
1) s3 sends an IU to t0; thus, t0 will start a new rotation with respect to s3.
2) t0 sends the IU for d3; thus, t0 will start a new rotation with respect to d3.
3) The scheduler selects a source node to send an IU on t0 for d3 during the next rotation of t0 with respect to d3.

The sequencing of source-selections on the other tandems nodes are similar.

When considering the traffic performance (IU delay variation) achievable with a rotator switch architecture, the DBS algorithm significantly improves this performance with respect to the known source-based scheduling algorithm. When there is severe output contention for a destination node y, the DBS algorithm provides a fair distribution amongst the contenting source nodes of the bandwidth available to reach this destination node y; this is because the scheduling decisions are performed from a destination-node point of view.

By contrast, under such a severe output contention, the known source-based scheduling algorithm is unfair, since a source node can reserve all the bandwidth available to reach the destination node y, leaving little or no bandwidth at all for the other contenting source nodes.

### A.2 Extension of DBS algorithm to consider traffic priority

Assume C classes of traffic are supported by the core fabric of the rotator switch architecture. The classes are numbered 1, 2, ..., C, in decreasing order of priority, the class 1 being the highest priority class, and the class C being the lowest priority class.

It is possible to support more than C classes of traffic in the source and destination nodes; however, in that case, this superset of classes must be map onto the C classes provided by the core switch to be routed from the source nodes to the destination nodes.

The basic principle for extension of the DBS algorithm to support C classes of traffic is to consider each class of traffic, one after the other, following the decreasing order of priority.

To support strict priority between two adjacent classes, the source-selection for the high class priority traffic for all destination nodes on a given tandem node must be completed before considering any low class priority traffic. For a given future rotation of a tandem node, the highest class traffic is first scheduled for each destination node, one destination node after the other; then, for the unassigned (residue) bandwidth on the tandem node (either from source nodes to the tandem node, or from the tandem node to destination nodes), the second class traffic is scheduled for each destination node; this process is repeated until the last class traffic is scheduled.

Since the source-selections on a tandem node are completed for one destination node after the other, following the order in which the tandem node is connected with the destination nodes, many classes of service can be scheduled by making source-selections for C rotations of the tandem node at a time; for a given destination node, the source-selections for the highest class traffic can be completed for a rotation on the tandem node with respect to the destination node that will start in C rotations, while the source-selections for lowest class traffic can be completed for the next rotation of the tandem node with respect to the destination node. In this way, when scheduling for a given class of service for a given rotation of a given tandem node, the source-selections for higher class traffic has been already completed for all destination nodes for this rotation of this tandem node.

To support the scheduling for many classes of service, the data structures of the basic DBS algorithm (DBS1) are extended in the class dimension:
Q(x,c,y): the Queue-fill status of source node x of class c for destination node y.
TDS(y,c,z): the Tandem-Destination-Status (TDS) for destination node y on tandem node z for traffic of class c or higher. TDS(y,c,z) corresponds to the number of IUs of class c or higher the destination node y is already scheduled to receive from tandem node z during a future rotation of z with respect to destination y. This value is updated during scheduling to guarantee that the above scheduling constraint 1 is satisfied.
TSS(x,c,z): the Tandem-Source-Status (TSS) for source node x on tandem node z for traffic of class c or higher. TSS(x,c,z) corresponds to the number of IUs of class c or higher the source node x is already scheduled to send on tandem node z during a future rotation of z with respect to the source node x. This value is updated during scheduling to guarantee that the scheduling constraint 2 above is satisfied.

The extension of the DBS_1 algorithm to consider C classes of service consists in making K source-selections at each phase for each destination node and for each class, the source-selections being performed on the tandem node connected with the destination node, but for C different rotations of the tandem node, one class per rotation. The core scheduler of the algorithm is presented below as a function DBS_2 (line 0 to line 17); this function is executed at each phase p of the rotator.

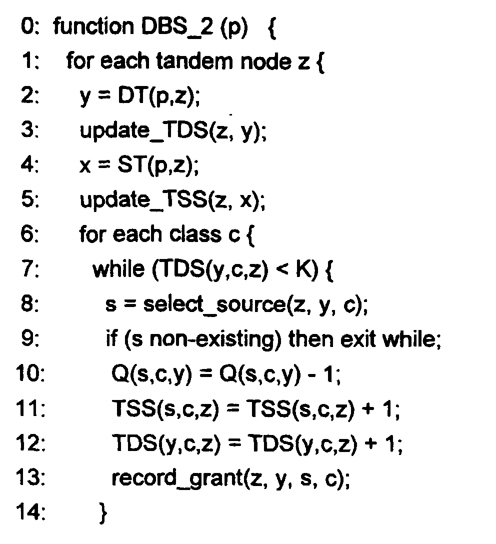

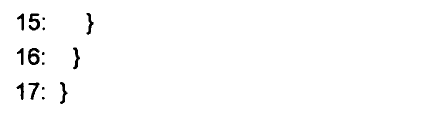

For each rotator-phase, source-selections are computed on each tandem node (line 1 to line 16). For each tandem node z, the source-selections are for the destination node y connected with this tandem node (line 2). The availability of TDBs on the tandem node z associated with this destination node y are updated accordingly for each class of service (line 3); the update is computed by the function update_TDS presented below:

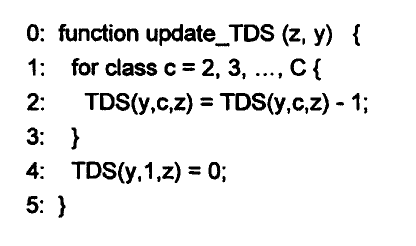

That is, the TDS value of the tandem node z for the destination node y associated with a class of service takes the residual TDS value associated with the next higher class of service, excepted for the highest class of service for which the TDS value is reset.

Similarly, since the tandem node z starts a new rotation with respect to the source node x (line 4), the reservation status of this source node on this tandem node is updated accordingly for each class of service (line 5); the update is computed by the function update_TSS presented below:

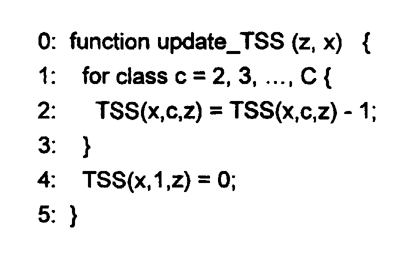

The source-selections are computed for each class of service, each for a different rotation of the tandem node (line 6 to line 15). For each class of service c, up to K source-selections are completed for destination node y on tandem node z (line 7 to line 14); the source-selections are completed one at a time, using the function select_source which return the selected source node s (line 8). The extension of this function to consider class of service is discussed below.

If no source node s is selected, then the source-selections for the destination node y on the tandem node z are terminated for this class of service c (line 9). Otherwise, the data structures are updated in accordance with the selected source node (line 10 to line 13): the queue-fill status of the selected source node s for the destination node y and class of service c is decremented (line 10); the reservation status for the selected source node s on the tandem node z for the class of service c is incremented (line 11); the reservation status of the destination node y on the tandem node z for the class of service c is incremented (line 12); finally, the grant information corresponding with the selection of source node s for destination node y on tandem z for the class of service c is forwarded to the grant manager; the recording of the grant by the grant manager is performed by the function record_grant (line 12), which is extended to consider class of service, i.e., to relate the grant with the effective rotation of the tandem.

A round-robin implementation of the select_source function which considered the class of service c is presented below (line 0 to line 8). One round-robin pointer is used per destination node and class of service, LSS(y,c), which record the Last-Selected Source for destination node y and class of service c (regardless of the tandem node).

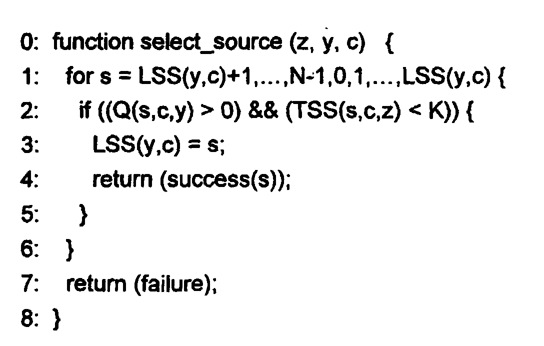

The round-robin selection is implemented by considering all the source nodes, in the increasing order, starting after the last selected source (line 1 to line 6). A source node s is a candidate for destination node y on tandem node z for class of service c if TSS(x,c,z) is smaller than K, and if Q(x,c,y) is greater than 0; the selected source node is the first candidate considered following the round-robin order. If such a source node s exist (line 2), the value of the round-robin pointer for destination node y and class of service c is set to s (line 3), and s is successfully returned by the function select_source (line 4). Otherwise, no source node is selected, and the function select_source returns a failure (line 7).

As for the classless DBS algorithm (DBS_1), many variants of the select_source function are possible.

Note that with C = 1, the DBS_2 function degenerates into the DBS_1 function.

Although class priority is an important feature to be supported by a switch architecture, a strict priority between classes may not always be acceptable. For instance, it is not possible to guarantee a minimum bandwidth for a low class service. This is because high class traffic can always prevent allocation of bandwidth for traffic of a lower class.

However, to guarantee minimum bandwidth to any class of traffic, the same algorithm as proposed for strict class priority can be used. In that scheme, the highest priority class can be dedicated to any class of traffic for which a minimum allocation of bandwidth must be guaranteed. That is, all the classes of traffic share the highest class such that each class can make "high-class" requests at the rate corresponding with its minimum bandwidth guarantee. The minimum bandwidth allocation can be guaranteed because the high priority class request are satisfied strictly before the request of a lower priority, assuming that the aggregate of minimum bandwidth guarantee is not overbook (this assumption is required for any scheduling algorithms to honor the minimum bandwidth guarantee).

It is the responsibility of the source nodes to map the IU of any class to the first class of service in order to guarantee minimum bandwidth. There are many ways to implement this scheme, a simple way being to associate one counter with each logical input queue (per destination and class), where this counter represents the credit available for the corresponding traffic flow. The counter is incremented at a rate corresponding to the minimum bandwidth to guarantee, up to a given limit of credit Each time an IU is received, the high-class request is performed if the corresponding credit counter is not zero, and the counter is decremented; otherwise, a normal request is performed. The source node must record the number of highclass request it has made for a destination node for each class of service, such that when high-class grant are received for this destination node, the source node can provide an IU corresponding to a class having pending high-class requests.

### A.3 Request ageing

During a source-selection of class c for a destination node y, since the queue-fill status Q(x,c,y) as seen by the scheduler does not include time information, two source nodes x1 and x2 are considered of equivalent priority when both Q(x1,c,y) and Q(x2,c,y) are greater than 0, regardless of the queue-fill history of the source nodes. The source-selection is only based on the current round-robin pointer LSS(y,c), as well as whether or not the source nodes are eligible for the current tandem node z, i.e., the values of TSS(x1,c,z) and TSS(x2,c,z).

During a severe output contention for a destination node y, the values of Q(y) may become large for the set of source nodes contenting for the destination node y. Thus, it can be advantageous from a traffic performance point of view to consider the history of the queue-fill values when performing the source-selection, since the source node having a queue-fill value corresponding with the oldest IU having entering the switch should be considered first.

It is not practical for the scheduler to associate an exact historical information with the queue-fill values. However, it is possible to approximate the history of queue-fill using age-groups. Assume J age-groups are supported, numbered 1, 2, ..., J, in the decreasing order of age, the age-group 1 being used for the requests associated with the oldest IUs, and the age-group J being used for the requests associated with the youngest IUs.

To considered the queue-fill history during the scheduling, the queue-fill data structure of the DBS algorithm (DBS2) is extended in the age-group dimension:
Q(x,j,c,y): the Queue-fill status of source node x from the age-group j of class c for destination node y.

The extension of the DBS_2 algorithm to consider the queue-fill history consists only in providing a select_source function which considers the age-group dimension and returns the age-group component associated with the selected source node. The core scheduler of the algorithm is presented below as a function DBS_3 (line 0 to line 17); this function is executed at each phase p of the rotator.

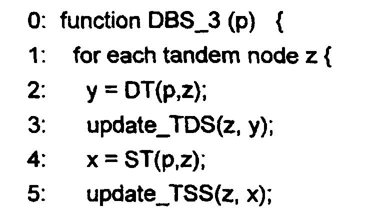

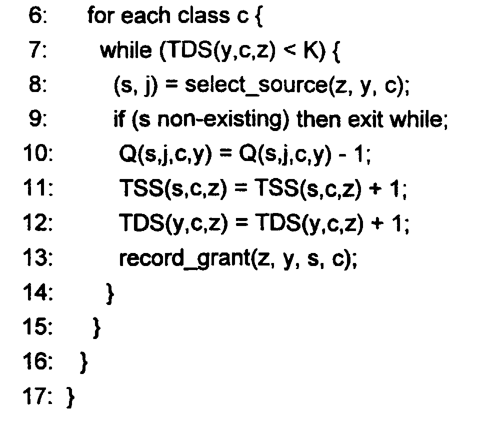

A round-robin implementation of the select_source function which considered the age-groups is presented below (line 0 to line 10).

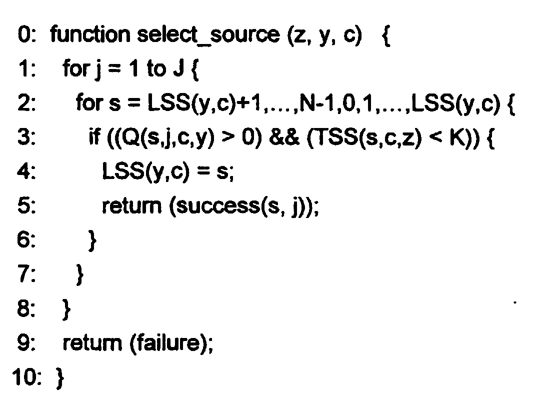

As for the age-groupless DBS algorithm (DBS_2), many variants of the select_source function are possible.

Note that with J=1, the DBS_3 function is degenerated in the DBS_2 function.

The quality of approximating the queue-fill history using the age-group dimension is dependant on the number J of age-groups, and the relation between these age-groups and the queue-fill history. The best approximation would be achieved using an infinite number of age-groups, which is not practical.

Given a finite number J of age-groups, here are two possible ageing schemes of the age-groups:
1) The ageing of each age group is performed at a specified rate, named ageing rate, given as a parameter. Many combinations of these parameters are possible to form many ageing configurations. For instance, a non-linear ageing scheme can be implemented by ageing each age-group at a rate two time slower than the ageing rate of the younger age-group.
2) The ageing of each age-group is performed when the older age-group is empty.

### A.4 Physical Implementation

The physical implementation of the DBS_3 algorithm depends on the phase duration, which is dependant on the bandwidth supported by each source node, or equally by each destination node, and, as well, on the IU size.

For instance, with 2.5Gb/s source-destination nodes and 64Byte IU, the phase duration is approximately K.205ns. For a given destination node y and a class of service c, since K source-selections must be computed at each phase (line 7 to line 14 of the DBS_3 function), each one must be computed in 205ns. Thus, the DBS_3 function must compute NC source-selections per 205ns for a rotator switch architecture configuration with N source-destination nodes and C classes of service; for a 640Gbps switch configuration (i.e., with N = 256), and 4 classes of service (C = 4), the computation rate corresponds to one source-selection per 0.2ns, which is approximately a 5GHz rate.

To achieve an high processing rate, the DBS_3 algorithm can be distributed such that many source-selections can be computed in parallel. A natural distribution of the algorithm is per destination-node.

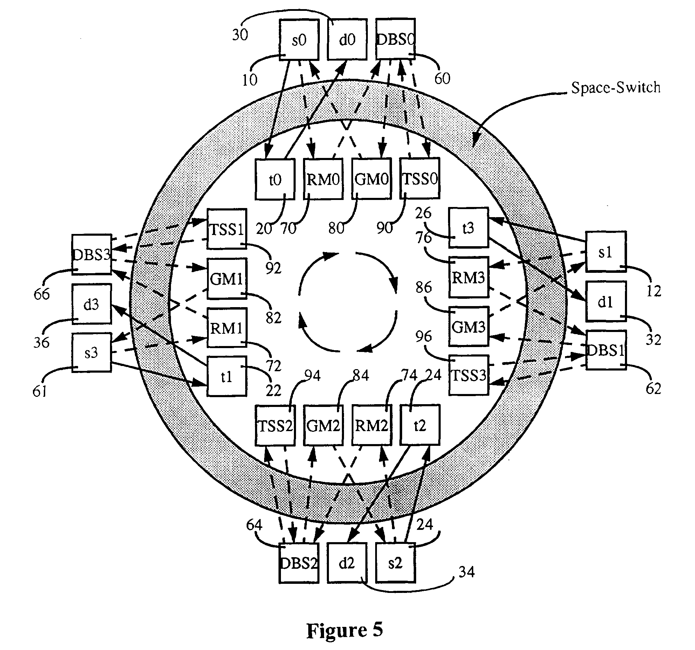

Referring to Fig. 5 it is illustrated as a circular representation a distributed implementation of the DBS_3 algorithm. The destination-based scheduler associated with a destination node y (DBSy entity 60, 62, 64, 66) is physically collocated with the destination node y. Besides being used as usual for the IU data flow, a tandem node z is used to carry the requests, via the RMz entity 70, 72, 74, 76, from the source nodes to the DBS entities, and to carry the grants, via the GMz entity 80, 82, 84 86, from the DBS entities back to the source nodes. Furthermore, the tandem node is used as well to carry its associated TSS value, via the TSSz entity 90, 92, 94, 96, from destination node DBS entity to destination node DBS entity.

During each rotator-phase, the GMz entity sends the grants to the connected source node x, indicating to the source node which IUs it must send to the tandem node z, while the RMz entity sends the previously received requests for the connected destination node y to the DBSy entity. At the same time, the source node x can send its request to the RMz entity, such that the request will be forwarded to the appropriate destination node DBS entity. Furthermore, the TTSz entity sends the current TSS value associated with the tandem node z to the DBSy entity. Based on the TSS value, the DBSy entity can compute the source-sections on the tandem node z for the destination node y (line 6 to line 15 of the DBS_3 function). Concurrently, the normal IU data flow can proceed from the source node x to the tandem node z, and from the tandem node z to destination node y. To complete the phase, the DBSy entity sends the grants (source-selections) to the GMz entity, as well as the resulting TSS value to the TSSz entity.

Using the above distributed implementation, each DBS entity needs to compute KC source-selections per phase, i.e., K source-selections for each class of services; thus, each DBSy entity needs to implement the Q(x,j,c,y) data structure restricted to destination node y. Furthermore, since the K source-selections for each class of service are computed for different rotations of the tandem node z, the functionality of the DBS entity can be distributed per class, named DBSy,c entity, where each DBSy,c entity needs to compute K source-selections per phase, and thus needs to only implement the Q(x,j,c,y) data structure restricted to destination node y and class of service c.

The above distributed implementation is advantageous because the existing IU data path is used to implement the communication path from the source nodes to the scheduler and from the scheduler back to the source nodes. Furthermore, the request-manager function and grant-manager function are both distributed amongst the tandem nodes.

However, the above distributed implementation is problematic because of the relatively long latency required to transfer the TSS values between DBS entities. More the latency of the TSS transferred is long, less is time remaining to the DBS entity for making the source-selections on the connected tandem node for the associated destination node. Worst, the size of the TSS values may be significant, in particular for large switch configurations, and the bandwidth required to transfer these values steal the one which would be available for transferring user data IUs.

To overcome the above problem related with the transfer of TSS values, all the DBS entities can be centralised at the same physical location.

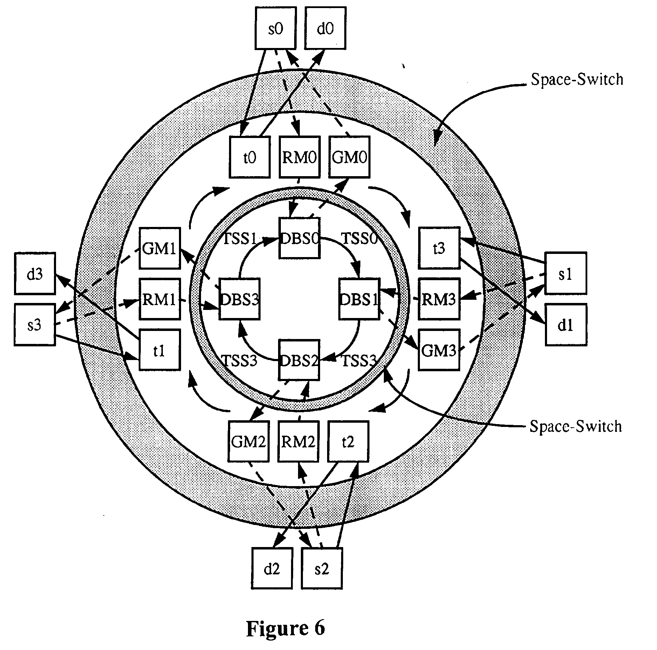

Referring to Fig. 6 it is illustrated as a circular representation a centralised implementation of the DBS_3 function. The destination-based scheduler associated with a destination node y (DBSy entity) is collocated with all the others DBS entities. Besides being used as usual for the IU data flow, a tandem node z is used to carry the requests, via the RMz entity, from the source nodes to the DBS entities, and to carry the grants, via the GMz entity, from the DBS entities back to the source nodes

In the centralised implementation, the data IU space switch bandwidth is only used to transfer the requests from the source node to the RM entities, and the grants from the GM entities back to the source nodes. Another space switch is dedicated to transfer the requests from the RMz entities to the DBS entities, and to transfer the grants from the DBS entities to the GMz entities. Furthermore, the TSS values are directly transferred from DBS entity to DBS entity. Schematically, the source-destination nodes ring as well as the DBS entity ring are fixed, while the tandem node ring is rotating between these two.

As for the distributed implementation, the centralised implementation is advantageous because the existing IU data path is used to implement the communication path from the source nodes to the request manager and from the grant manager to the source nodes. Contrary to the distributed implementation, however, the latency to transfer the TSS values can be minimised, because the DBS entities are collocated.

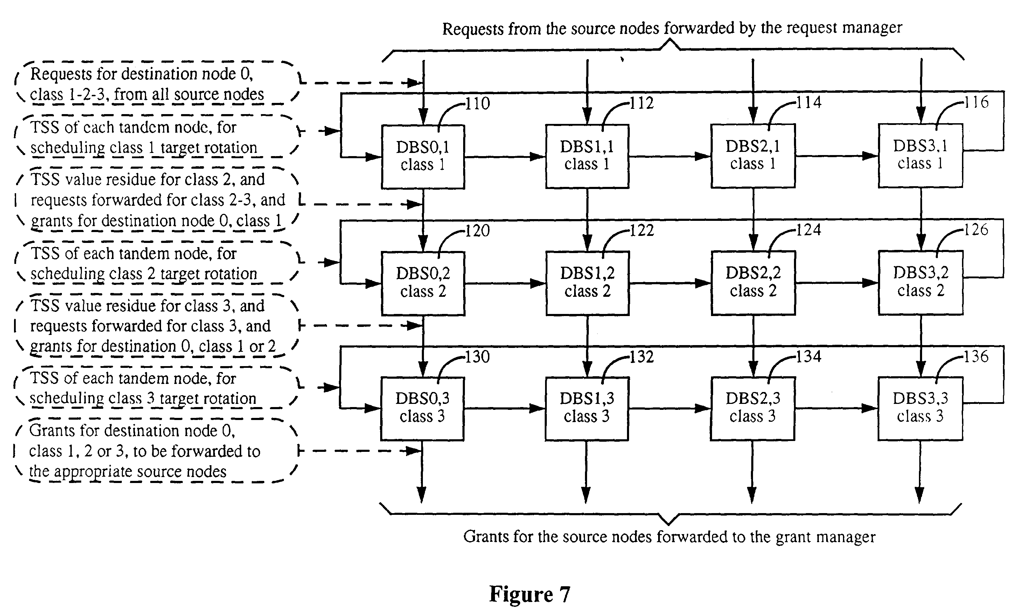

Referring to Fig. 7 it is illustrated in more details a centralised implementation of the DBS_3 algorithm. For this implementation, one physical device is used to implement the functionality associated with exactly one DBSy,c entity (line 7 to line 14 of the DBS_3 function). Thus, 12 physical devices are needed 110, 112, 114, 116, 120, 122, 124, 126, 130, 132, 134, 136, since 4 destination nodes and 3 classes of service are assumed in the example. The implementation is composed of 3 identical rows of 4 DBS devices, each row being responsible for the source-selections of one class of service. The requests from the source nodes, all classes of service, forwarded by the grant manager for a destination node, enter via the corresponding DBS device of class 1, and are then forwarded to the corresponding DBS devices of class 2 and class 3.

At each phase, each DBS device computes the source-selections for its associated destination node on a given tandem node. For a given class of service (row), each DBS entity computes source-selections for its associated destination node, each on a different tandem node; then, the resulting TSS value associated with the tandem node is transferred to the DBS device associated with the next destination node the tandem node will be connected with at the next phase of the rotation; an efficient electronic link can used to carry the TSS values from a DBS device to the following one. For a given destination node (column), each DBS device computes source-selections for its associated destination node on the same tandem node, each for a different target rotation of this tandem node that corresponds with the class of service the DBS device is responsible for.

Before making the source-selections on a given tandem node, a DBS device transfers the TSS residue associated with the tandem node to the corresponding next class DBS device, as required in the algorithm for updating the TSS values (line 5 of the DBS_3 function). After making the source-selections on a given tandem node, the selected source nodes are forwarded to the corresponding next class DBS device; the grant forwarding implement implicitly the transfer of the TDS residue associated with the tandem node, as required in the algorithm for updating the TDS value (line 3 of the DBS_3 function); furthermore, the grant forwarding implement part of the record_grant function which consists in forwarding the grants to the grant manager.

The above centralised implementation can be further optimised, since many DBS entities of the same class of service can be implemented on the same physical ASIC device. This permits to reduce the number of device, as well as minimising furthermore the latency related to the transfer of the TSS values. The number of DBS entities that can share the same physical ASIC device is mainly limited by the memory requirement for implementing the Q(x,j,c,y) data structure. The size of this data structure is dependant on the size of each queue-fill counter as well as the number of source nodes and age-groups, and the limitation is technology dependant.

### B. Load-share DBS algorithm

A weakness of the centralised architecture implementation of the DBS algorithm described in Section A is related to its fault tolerance. If one DBS device fails, no more source-selections are possible for the associated destination nodes, regardless of the tandem nodes. This weakness may be even worst since the faulty DBS device can make the whole scheduler faulty, since the TSS flow is broken.

Redundant interconnection between DBS devices can be provided to minimise the impact of a faulty DBS device. Depending on the number of redundant links provided, this solution can allow the scheduler to continue making the source-selections for all the destination nodes, excluding those associated with one or more faulty DBS devices.

A better solution is to duplicate all the DBS devices, i.e., the whole scheduler, where one scheduler is considered as the active one, while the other is considered as the stand-by one. In that protection scheme, each scheduler must receive the same requests from the source nodes, and must compute the same grants for these source nodes. This solution requires both schedulers to behave exactly in the same way, which can be very difficult to guarantee. For instance, a request can be lost for only one scheduler, making both schedulers to behave differently for a certain period of time, even if no scheduler is faulty; the synchronisation of the schedulers is mandatory but very difficult to achieve.

An even better solution using scheduler duplication is to make each scheduler responsible to compute the source-selections on only half of the tandem nodes. That is, the traffic load of the switch can be shared between two disjoint physical partitions of the switch fabric, each having its own scheduler. Thus, each scheduler can perform the source-selections at a rate two times slower compared to the rate required when a single scheduler is used. In the case one scheduler become faulty, either half of the switch capacity is lost, or the other scheduler can become responsible to schedule all the traffic load on all the tandem nodes, providing that it was implemented to compute the source-selections at the full rate.

The performance of the rotator switch using the load-share DBS algorithm is dependant upon the efficiency of the load sharing between the two schedulers. It is the responsibility of the source node to evenly distribute its requests between both schedulers. This can be achieved in many ways; for instance, a simple random distribution scheme can be used in which for each incoming IU the source node selects randomly, following an uniform distribution, to which scheduler it will send the request corresponding to the arrival of this IU. When the requests are evenly distributed, the performance of the rotator switch using the load share DBS scheduler and the single DBS scheduler are similar.

The degree of load-sharing can be increased beyond two schedulers, up to the number of tandem nodes N. That is, a scheduler can be associated with each tandem node; in that case, the requests from a source node must be evenly distributed amongst all the tandem nodes.

To distribute the load amongst all the tandem node, the queue-fill data structure of the DBS algorithm (DBS_3) is extended in the tandem node dimension:
Q(x,j,c,y,z): the share of the Queue-fill status of source node x on tandem node z from the age-group j of class c for destination node y.

The extension of the DBS_3 algorithm to consider the load-share amongst the tandem nodes consists only in providing a select_source function which considers the share of the queue-fill status associated with the tandem node. The core scheduler of the algorithm is presented below as a function DBS_4 (line 0 to line 17); this function is executed at each phase p of the rotator.

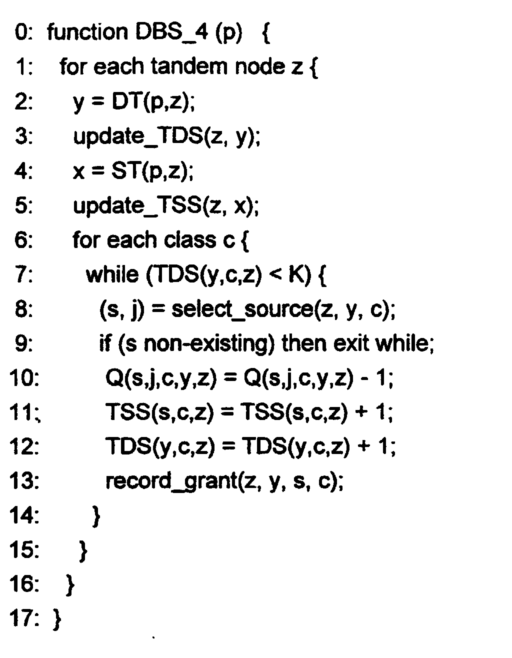

A round-robin implementation of the select_source function which considered the load-sharing is presented below (line 0 to line 10). One round-robin pointer is used per destination node, tandem node, and class of service, LSS(y,z,c), which records the Last Selected Source for destination node y on tandem node z for class of service c.

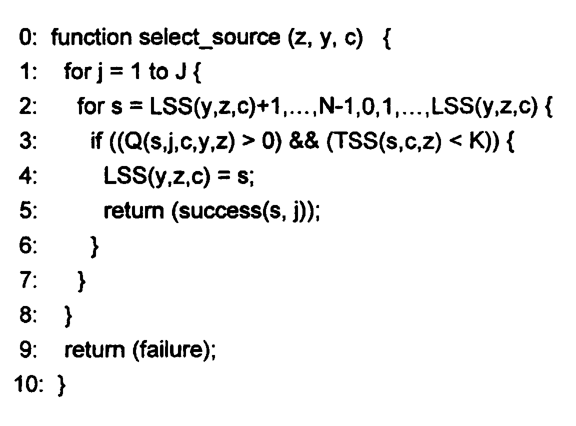

As for DBS_3 algorithm, many variants of the select_source function are possible.

Notice that the DBS_4 algorithm can be adapted for any degree of load-sharing between 1 and N, where source-selections on a given tandem node are made by exactly one scheduler which received a load-share corresponding with the ratio of tandem nodes it is responsible for. For the case of a load-sharing degree of 1, the DBS_4 algorithm is degenerated in the DBS_3 algorithm.

The main advantage in using a load-sharing degree of N (i.e., associated one scheduler per tandem node) is the high fault-tolerance implementation of the architecture that can be achieved.

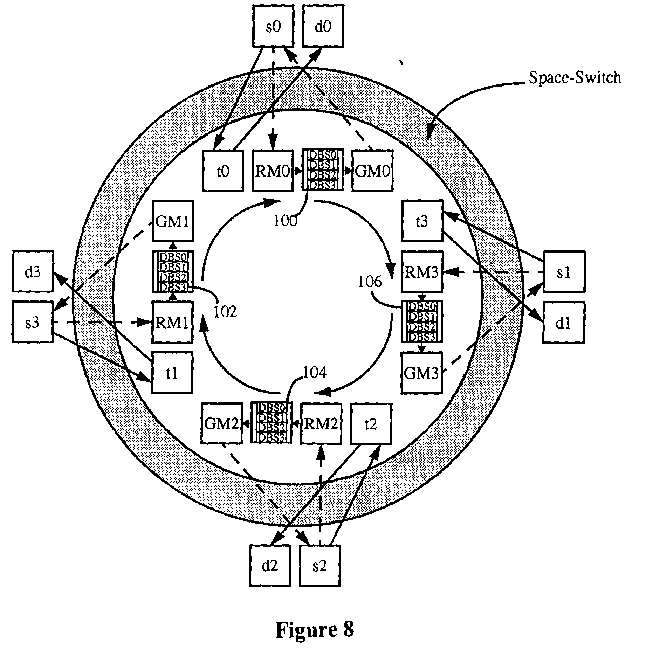

Referring to Fig. 8 it is illustrated as a circular representation an N-degree load-sharing implementation of the DBS_4 function. The destination-based scheduler associated with a destination node y (DBSy entity), for a given tandem node z, is collocated with the tandem node z and with all the others DBS entities associated with the tandem node z. That is, each tandem node is collocated with its own scheduler 100, 102, 104, 106. Besides being used as usual for the IU data flow, a tandem node z is used to carry the requests, via the RMz entity, from the source nodes to its local DBS entities, and to carry the grants, via the GMz entity, from its local DBS entities back to the source nodes.

Notice that the rate to compute the source-selections for a tandem node by its associated scheduler (load-sharing degree of N) is N times slower than the rate required in the case of a single scheduler for all the tandem nodes (load-sharing degree of 1). Each scheduler can be implemented as illustrated in Fig. 7, but the implementation can be less complex (in terms of number of ASIC devices) since the required processing rate of the scheduler is N times slower.

An high degree of fault tolerance can be achieved because:
1) If a scheduler becomes faulty, its associated tandem node can be considered as faulty, resulting in a bandwidth penalty of 1/N.
2) If a tandem node becomes faulty, its associated scheduler can be considered as faulty, resulting in a bandwidth penalty of 1/N.

This bandwidth capacity can be easily compensated by having a rotator switch fabric that provides some bandwidth expansion with respect to the user traffic.

### C. DBS algorithm extension for rotator architecture with compound-tandem nodes

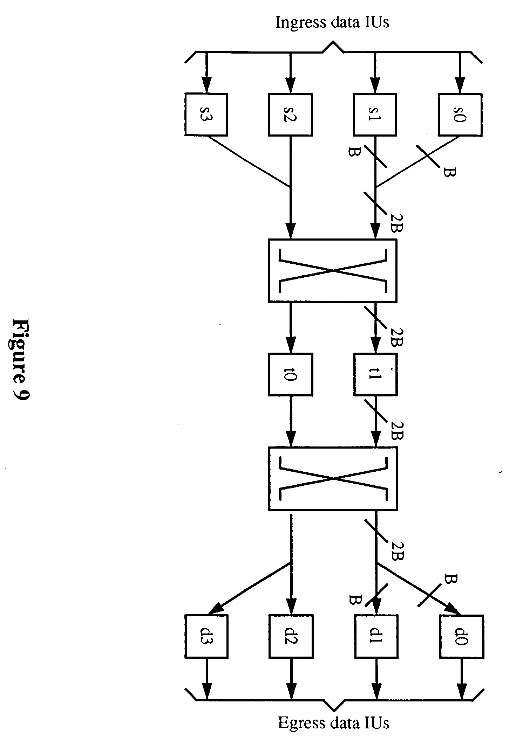

Referring to Fig. 9 there is illustrated a 4-node configuration of the rotator switch extension using compound-tandem nodes of degree 2. In operation, each tandem node is connected at the same time with two source nodes as well as with two destination nodes, reducing by a factor of 2 the rotation latency with respect to the known rotator switch. Detailed descriptions of this rotator switch are given in the above referenced copending patent application.

In general, using compound-tandem nodes of degree u, a tandem node is connected with u source nodes at a time and with u destination nodes at a time.

At each scheduling phase (each call of the function DBS_3), a tandem node z terminates a scheduling rotation with respect to u destination nodes, and with respect to u source nodes. It is thus possible to perform source-selections for these u destination nodes on the tandem node z. From an implementation point of view, referring to Fig. 7, the TSS value associated with the tandem node z need to be considered by two DBS devices at each phase.

The N degree load-sharing DBS_4 algorithm is extended in a similar way. In that case, because of the compound-tandem nodes, there are less tandem node and thus less scheduler, but there is always one scheduler associated with each tandem node. At each phase, each scheduler must complete the source-selections for u destination nodes on its associated tandem node.

### D. DBS algorithm extension for rotator architecture with parallel rotator slices

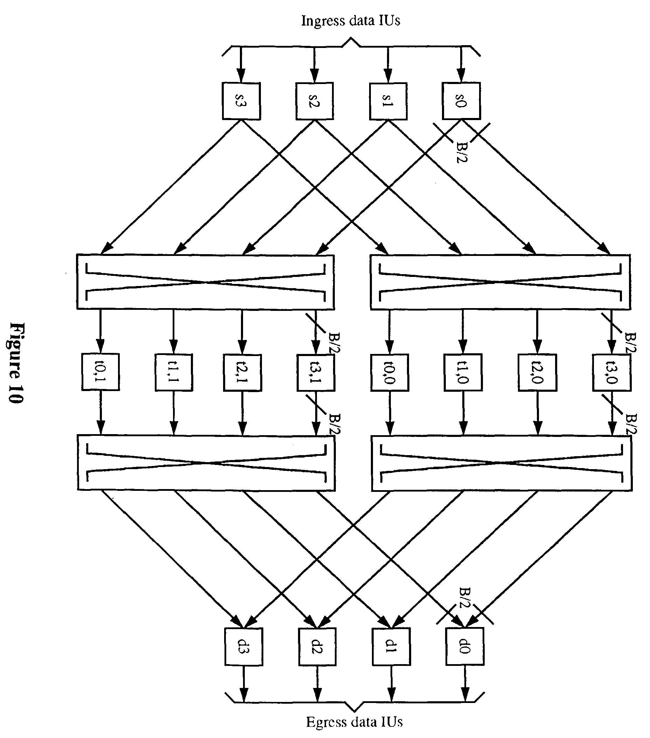

Referring to Fig. 10 there is illustrated a 4-node configuration of the rotator switch extension using parallel rotator slices of degree 2. In operation, each source node is connected at the same time with two tandem nodes, and similarly for each destination node, increasing by a factor of 2 the number of physical path between each combination of source-destination nodes with respect to the known rotator switch. Detailed descriptions of this rotator switch are given in the above referenced copending patent application.

In general, using parallel rotator slices of degree v, a source node is connected with v tandem nodes at a time and a destination node is connected with v tandem node at a time, as well. That is, v independent rotator switch fabrics are used.

At each scheduling phase (each call of the function DBS_3), v tandem nodes terminate a scheduling rotation with respect to the same destination node y, and with respect to the same source node x. It is thus possible to perform source-selections for this destination node y on these v tandem nodes. From an implementation point of view, referring to Fig. 7, a DBS device needs to consider the TSS values associated with 2 tandem nodes at each phase.

The N degree load-sharing DBS_4 algorithm is extended in a similar way. In that case, because of the parallel rotator slices, there are more tandem nodes and thus more schedulers, but there is always one scheduler associated with each tandem node. At each phase, each scheduler must complete the source-selections for a destination node on its associated tandem node.

### E. DBS algorithm extension for rotator architecture with compound-tandem nodes and parallel rotator slices

Normally, the compound-tandem node extension and parallel rotator slice extension should be used together. The parallel rotator slices increase the number of physical paths from each source node to each destination node, which results in an architecture inherently fault-tolerant with respect to the data flow. However, the latency of the rotator switch (rotation delay of one tandem node) is increased by a factor v corresponding to the number of parallel rotator slices. On the other hand, the advantage of the compound-tandem nodes architecture is to reduce this latency of the rotator switch by a factor of u, where u is the number of source or destination nodes connected at the same time with a tandem node.

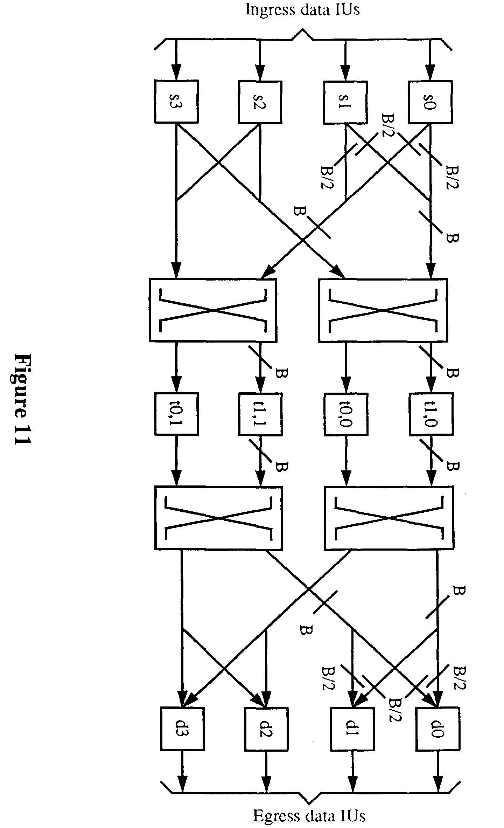

Referring to Fig. 11 there is illustrated a 4-node configuration of the rotator switch extension combining compound-tandem nodes of degree 2 and parallel rotator slices of degree 2. In operation, each tandem node is connected at the same time with two source nodes as well as with two destination nodes, while each source node is connected at the same time with two tandem nodes, and similarly for each destination node. Detailed descriptions of this rotator switch are given in the above referenced copending patent application. In general, combining compound-tandem nodes of degree u and parallel rotator slices of degree v, a tandem node is connected at the same time with u source nodes as well as with u destination nodes, while a source node is connected with v tandem nodes at a time and a destination node is connected with v tandem node at a time, as well. The DBS algorithm for the known rotator architecture can be easily extended for this architecture.

At each scheduling phase (each call of the function DBS_3), v tandem nodes terminate a scheduling rotation with respect to the same set of u destination nodes, and with respect to the same set of u source nodes. It is thus possible to perform source-selections for these u destination nodes on these v tandem nodes. From an implementation point of view, referring to Fig. 7, a DBS device needs to consider the TSS values associated with 2 tandem nodes at each phase, while the TSS value associated with a tandem node need to be considered by two DBS devices at each phase.

The N degree load-sharing DBS_4 algorithm is extended in a similar way. Since there is always one scheduler associated with each tandem node, at each phase, each scheduler must complete the source-selections for u destination nodes on its associated tandem node.

### F. DBS algorithm extension for rotator architecture with double-bank tandem nodes

As discussed previously, when considering the traffic performance achievable with a rotator switch architecture, the DBS algorithm improve significantly this performance with respect to the known source-based scheduling algorithm. It is because the DBS algorithm fairly distributes amongst the source nodes the bandwidth available to reach a destination node.

Although the improvement is very significant, the proposed DBS algorithm is inherently biased for a source-node point of view. Because a tandem node is starting a new rotation at a different phase with respect to each destination node, there exists a fixed dependency between the time a source node become eligible to be selected on a given tandem node, and the time a destination node perform a source-selection on this tandem node. For a given source node, this time dependency is different for each destination node; thus, a source node x is more likely to be eligible for a source-selection by a destination node closer with x than by a destination node further with x.

For instance, when completing source-selections for destination node 1, on any tandem node, source node 1 has not yet been considered as a candidate for any destination node for this rotation of the tandem node with respect to source node 1. On the other hand, when completing source-selections for destination node 0, source node 1 has been considered as a candidate for all destination nodes excepted destination node 0 for this rotation of the tandem node with respect to source node 1. In the case source node 1 has IU traffic for destination node 0 and destination node 1, source node 1 is less likely to be eligible for a source-selection by destination node 0 than by destination node 1, since destination node 1 makes always its source-selection before destination node 0, for the point of view of source node 1.

The double-bank tandem node architecture is proposed as an extension of the known rotator architecture to eliminate the above problem. In the double-bank architecture each tandem node has two banks of TDBs, one for receiving IUs from the source nodes, and one for sending IUs to destination nodes. The banks are swap once per rotation. To guarantee a correct IU ordering at the destination node, the banks must be swap at a fixed position of the rotation for all tandem nodes; we suppose in the following that the swapping occurs when the tandem nodes is connected with source node 0.

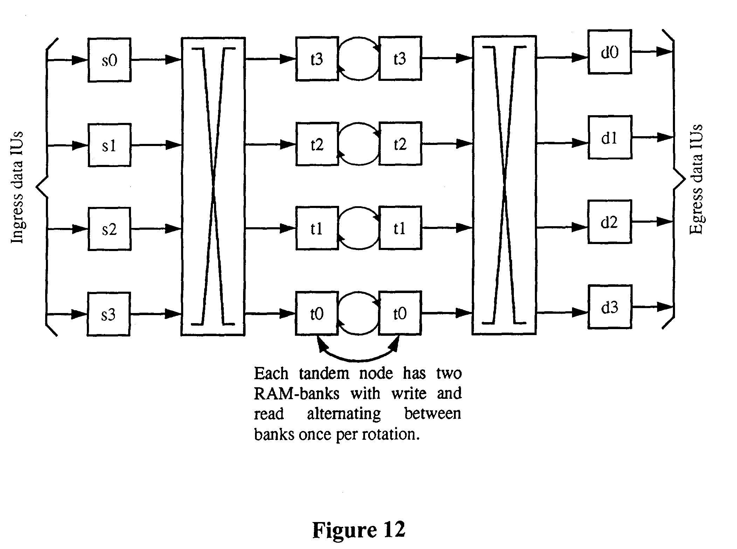

Referring to Fig. 12 there is illustrated a 4-node configuration of the rotator switch extension using double-bank tandem nodes. In operation, each tandem node stored the IU received from the connected source node in one bank, while the IU sent to the connected destination node is read from the other bank. The tandem node swap its banks when it is connected with the source node 0. Detailed descriptions of this rotator switch are given in the above referenced copending patent application.

In the following, we do not consider the compound-tandem node and parallel rotator slice architectural extension, although the double-bank tandem node architecture as well as the proposed scheduler can be extended for both the compound-tandem nodes and parallel rotator slices; the extensions for the DBS scheduling algorithm are similar to those proposed in the case of the compound-tandem node and parallel rotator slice architectural extension of the known rotator switch.

In the double-bank tandem node architecture, when a tandem node is connected with destination node 0, it terminates a rotation with respect to all the destination nodes. At each phase of the rotator, there is one tandem node starting a new rotation with respect to all the destination nodes. The objective of the scheduling algorithm is to select a source node for each destination node on a tandem node before this tandem node start a rotation. The destination node order for making the source-selections in no more constrained by the IU data flows.

For each tandem node z and target rotation of this tandem node, the scheduler must select K source nodes for each destination node to use the K TDBs associated with this destination node during this target rotation of z. For each rotation, the tandem node starts with an empty bank of TDBs for incoming IUs, and the destination node order for the source-selections is no more constrained by the rotator IU flow. However, a source node can be selected at most K times for each rotation of the tandem node, regardless of the destination nodes it is selected for.

The core scheduler of the algorithm is presented below as a function DBS_5 (line 0 to line 17); this function is executed at each phase p of the rotator.

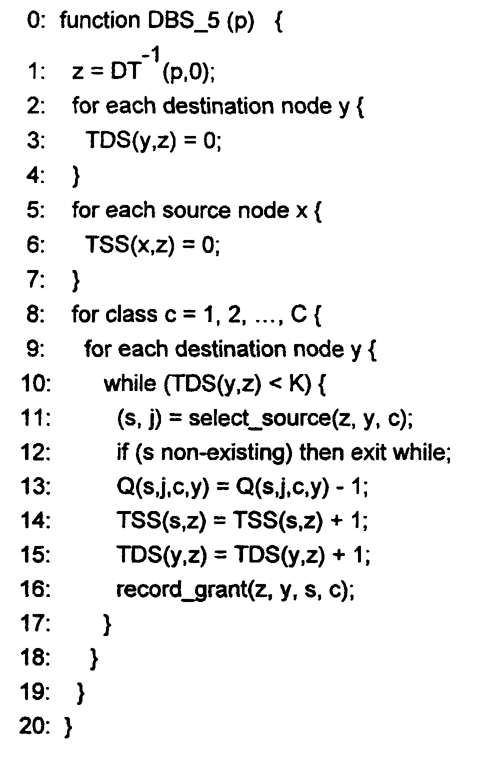

Contrary to DBS_3 algorithm, only one tandem node is scheduled per phase, and it is the tandem node z connected with destination node 0 (line 1); the inverse function DT⁻¹ (p,y) of the function DT(p,z) gives the tandem node connected with the destination 0 at phase p; in fact, DT and its inverse are the same function, following our node numbering, since when tandem node z is connected with the destination node y, the tandem node y is connected with the destination node z.

On this tandem node z, the TDS values are updated for each destination node y (line 2 to line 4), and the TSS values are updated for each source node x (line 5 to line 7). Since all destination nodes are scheduled during the same phase on one tandem node, it is no more required to schedule different classes of service for different rotations of the tandem node.

Then, source-selections are performed on the tandem node z for each class of service, from the highest priority class to the lowest priority class, since the source-selections are for the same target rotation of the tandem node z (line 8 to line 19).

Given a class of service, each destination node are considered for source-selections, one after the other (line 9 to line 18). The destination nodes can be considered in any order; for instance, a random order can be used, and in that case, for a source node point of view, the probability to be selected by a destination node is evenly distributed amongst all the destination nodes.

For a given destination node y, up to K source-selections are completed (line 10 to line 17); this part of the algorithms is as in the DBS_3 function, excepted that the class dimension needs no more to be associated with the TSS and TDS data structures.

A round-robin implementation of the select_source function which does not considered the class dimension of TSS is presented below (line 0 to line 10).

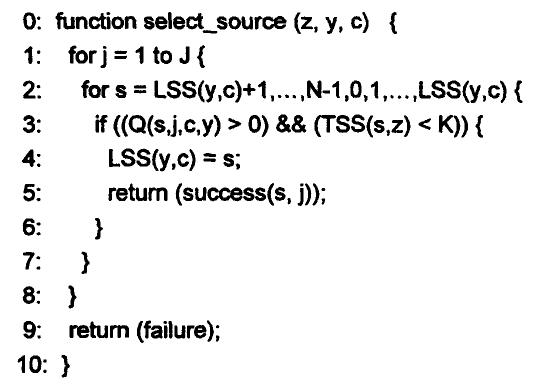

When the DBS_5 function is used as the core scheduler for the double-bank tandem node rotator switch architecture, the destination node bias as seen by a source nodes disappears, since a source node has the same probability to be selected by any destination nodes, providing a random ordering of destination nodes is used for the source-selections.

This algorithm can be easily extended for the N-degree load-sharing scheduler architecture. As before, the source-selections for a given tandem node must consider only the queue-fill share associated with this tandem node.

For a practical point of view, however, the DBS_5 function is much more complex to implement than the DBS_3 function. Each source-selection is a time consuming task, and they must be performed one after the other on a given tandem node for all the destination nodes and classes. It is because there is data dependency between source-selections on the same tandem node, since a source node can be selected up to K times on this tandem node, regardless of the destination node.

Furthermore, it is difficult to compute source-selections at the same time for the same destination node on two or more tandem nodes. It is because for each source-selection the queue-fill status associated with the destination node must be considered and updated, regardless of the tandem node for which the source-selection is computed.

In the case of the DBS_3 function, this problem of data dependency is not significant, since at each phase the source-selections are performed on different tandem nodes, and for different destination nodes. Furthermore, in order to perform source-selection for different class of services at the same time, the source-selections for each class is performed for different rotation of the tandem nodes.

In the case of the DBS_4 function, there is one scheduler associated with each tandem node. Thus, there is no problem of data dependency related with the concurrent source-selections for the same destination node on two or more tandem nodes, since the source-selections on each tandem node are based on local queue-fill status associated with the tandem node. However, the source-selections for different destination nodes on the same tandem nodes must be completed one after the other.

The above DBS_5 function can be modified to meet the constraint where at each phase source-selections are computed on all tandem nodes, all for a different destination node. We assume in the following, as for the DBS_3 algorithm implementation, that only K source-selections can be performed per phase on a given tandem node.

For a given class of service, since there is N destination nodes for which up to K source-selections must be completed on a tandem node for a target rotation of this tandem node, these source-selections must be started N phases ahead of the target rotation (i.e., one rotation ahead of the target rotation). Furthermore, source-selections for different class of service can be performed for different target rotations of the tandem nodes, as in the DBS_3 algorithm.

The basic principle of the extension of the DBS_5 function is that the source-selections for a given target rotation is started at the same time for all the tandem nodes, although the tandem nodes will effectively start this rotation each at a different rotator-phase. The scheduling process becomes a sequence of scheduling rotation, where during each scheduling rotation each destination node makes source-selections on each tandem node, one tandem node per phase, for the same target rotation of the tandem nodes for a given class of service, each class of service being scheduled for different target rotation. For each scheduling rotation, an ordering of destination nodes can be assigned to each tandem node, such that at each scheduling phase all destination nodes are making K source-selections each on a different tandem node. We assume phase 0 is used as the starting scheduling phase.

The core scheduler of the algorithm satisfying the above constraint for the rotator switch architecture with double-bank tandem nodes is presented below as a function DBS_6 (line 0 to line 23); this function is executed at each phase p of the rotator.

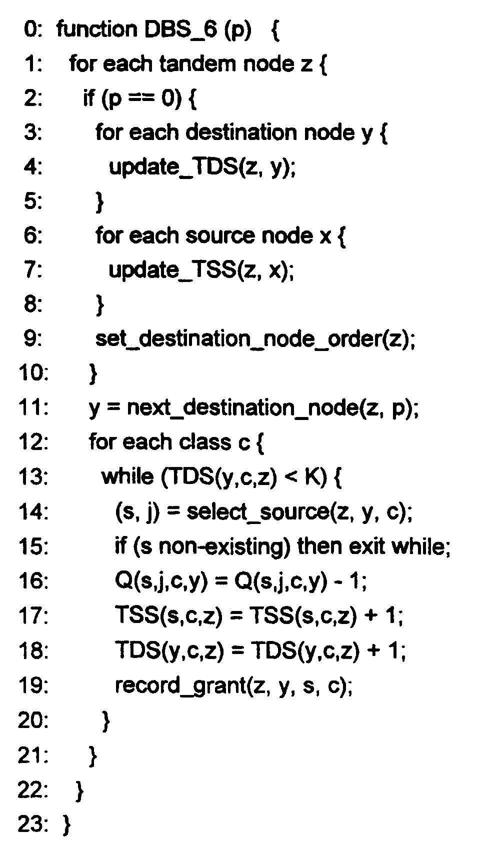

For each rotator-phase, source-selections are computed on each tandem node (line 1 to line 22). As discussed previously, scheduling for the next target rotation is started at the rotator-phase 0 (line 2). Thus, for each tandem node z, the TDS values are updated for each destination node y (line 3 to line 5), the TSS values are updated for each source node x (line 6 to line 8), and a ordering of the destination nodes for making the source-selections on the tandem node z, one destination node per phase, is generated (line 9); this ordering is generated with the set_destination_node_order function, which is discussed below. The requirement of this function, as described previously, is that the generated destination node ordering is such that at each scheduling phase all destination nodes are making K source-selections each on a different tandem node and, furthermore, during each scheduling rotation, each destination node is making K source-selections on each tandem node, one tandem node per scheduling phase.

Then, the destination node y for which source-selections can be performed on the tandem node z is computed (line 11); the destination node y is given by the function next_destination_node which returns the destination node y to schedule on tandem node z during the rotator phase p, as previously generated during the last rotator phase 0 by the function set_destination_node_order.

The source-selections for destination node y on tandem node z, for each class of service, each for a different target rotation of the tandem node z (line 12 to line 21) are computed in exactly the same way as in the DBS_3 algorithm (line 6 to line 15).

The fairness of the scheduling algorithm, for a source node point of view with respect to the destination nodes, is directly and only dependant on the perturbation of the destination node ordering as provided by the function set_destination_node_order. Theoretically, the ordering generated can be totally random, and the achievable performance is the same as the one achievable with the above DBS_5 algorithm. Although the DBS_6 algorithm is less efficient for a latency point of view, since scheduling for a target rotation of a given tandem node is performed much more in advance than in the DBS_5 algorithm, this latency can be keep small enough in a physical implementation of the rotator switch such that it becomes non significant for a traffic performance point of view.

The DBS_6 algorithm can be optimised for the N-degree load-sharing architecture, because all tandem nodes are independently scheduled. Thus, the destination node ordering for making the source-selections on a given tandem node is not constrained by ordering used for the other tandem nodes. This permits to relax the constraint of starting at the same time the source-selections on all the tandem nodes for a target rotation of these tandem nodes, although each tandem node will effectively start the target rotation at a different phase. Instead, at each phase, the scheduling for a target rotation can be started only for the tandem node starting effectively a rotation, i.e., the tandem node connected with the destination node 0.

The core scheduler of the N-degree load-sharing DBS algorithm for the rotator switch architecture with double-bank tandem nodes is presented below as a function DBS_7 (line 0 to line 23); this function is executed at each phase p of the rotator.

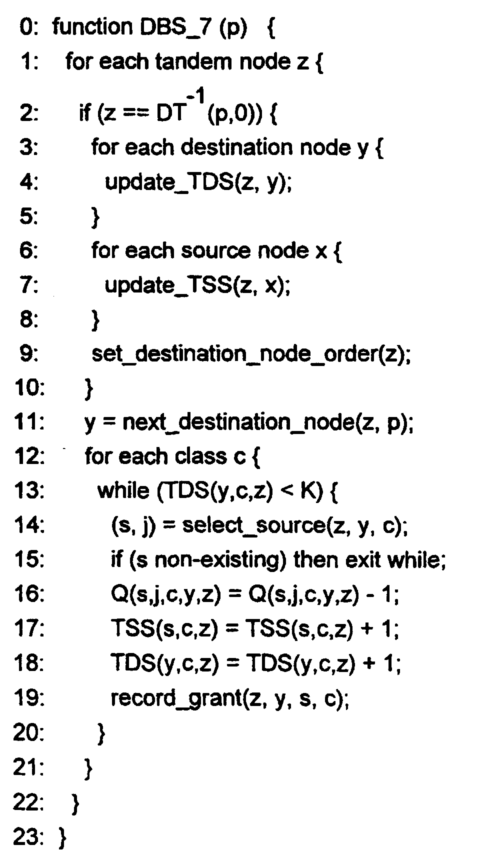

For each rotator-phase, source-selections are computed on each tandem node (line 1 to line 22). As discussed previously, scheduling for the next target rotation is started for the tandem node connected with the destination node 0 (line 2). Thus, only for this tandem node z, the TDS values are updated for each destination node y (line 3 to line 5), the TSS values are updated for each source node x (line 6 to line 8), and a ordering of the destination nodes for making the source-selections on the tandem node z, one destination node per phase, is generated (line 9); this ordering is generated with the set_destination_node_order function, which is discussed below. The requirement of this function, as described previously, is that the generated destination node ordering is such that during the scheduling rotation, each destination node is making K source-selections on the tandem node z, one destination node per scheduling phase.

Then, the destination node y for which source-selections can be performed on the tandem node z is computed (line 11); the destination node y is given by the function next_destination_node which returns the destination node y to schedule on tandem node z during the rotator phase p, as previously generated by the function set_destination_node_order for the tandem node z.

The source-selections for destination node y on tandem node z, for each class of service, each for a different target rotation of the tandem node z (line 12 to line 21) are computed in exactly the same way as in the DBS_4 algorithm (line 6 to line 15).

Practically, only a subset of all the possible destination node ordering may be generated by the function set_destination_node_order either for the DBS_6 algorithm or for the DBS_7 algorithm. In a practical implementation of the scheduling algorithm, the DBS entities (each one associated with a destination node and a class of service) is distributed amongst many physical devices; that is, each physical device is responsible in making source-selections for a fixed subset of destination nodes for a given class of service (and for a given tandem node in the case of the DBS_7 algorithm). In that case, the connectivity between these devices for transferring the TSS values constrained the possible perturbation that can be applied on the destination node ordering.

In the following, we discuss some practical implementations of the DBS_6 and DBS_7 functions with respect to the set_destination_node_order function.

### F.1 One-way DBS

In the one-way DBS scheme, an implementation as illustrated in Fig. 7 is proposed where, in general, each DBS device is responsible for making the source-selections for M destination nodes, 0 < M < N + 1 (for a given class of service). Without loss of generality, suppose that N is a multiple of M; thus, the N DBS entities are distributed between N/M DBS devices. Because of the strict connectivity between the DBS devices, after the source-selections on a given tandem node, each DBS device can transfer the residue of the TSS value only to the DBS device located physically at its right.

At the beginning of each scheduling rotation, the set_destination_node function can generate a random order of destination nodes for each group of M destination nodes associated with a DBS device. This random generation produce a global ordering of the destination nodes such that the destination node following a destination node y of a DBS device D is either the next one of its group of M destination nodes, if y is not the last one of its group, or, otherwise, it is the first one of the group of M destination nodes associated with the DBS device located physically at the right of D.

In the case of the DBS_6 function, a tandem node is associated (randomly) with each destination node at the beginning of the scheduling rotation; thus, M tandem nodes are associated with each DBS device. At each phase each DBS device computes K source-selections for each of the destination nodes it is responsible for, on the tandem node currently associated with the destination node; then, each TSS residue is transferred to the destination node at the right of the current destination node, following the previously generated random ordering. Thus, at each phase, there is always one TSS residue being transferred from a DBS device to its right neighbour. As required in the DBS_6 algorithm, each destination node can make K source-selections on each tandem node during each scheduling rotation, and each tandem node received K source-selections from each destination node during each scheduling rotation.

More M is large, more the destination node ordering perturbation can approximate a completely random perturbation, and a perfect approximation can be achieved with M greater than or equal to N/2 (i.e., with one or two DBS devices per class of service). For a smaller value of M, because there is more than 2 DBS devices (per class of service) and because the transfer of the TSS values follow a strict order of the DBS devices, the destination nodes associated with a DBS device makes always their source-selections after the destination nodes associated with the DBS device at its left, on N-M tandem nodes. This ordering scheme results in a bias, which is more significant when M is relatively small compare to N.

For instance, suppose that M = 1 and N = 256, a source-node x has a large number of IUs queue for destination node 0 and destination node 1, and has IUs only for these two destination nodes, and no other source nodes has IUs queued for these two destination nodes. Suppose furthermore that the DBS device responsible of destination node 1 is located physically at the right of the DBS device responsible for the destination node 0. In that case, the DBS device for destination node 0 is always selecting the source node x on all the tandem nodes before the DBS device for destination node 1, excepted for one tandem node per rotation. That is, the bandwidth for the point of view of source node x will not be fairly distributed between all the destination nodes.

In the case of the DBS_7 algorithm, there is only one tandem node scheduled by each DBS device at each scheduling rotation, and a destination node can be randomly selected as the starting one to make its source-selections on the tandem node. Since the tandem node must be considered in an order of the destination nodes similar as in the case of the DBS_6 function described above, the same bias exists. However, since each DBS entity is less complex in that case, much more can share the same DBS device, making M larger, and the bias problem become much less significant. Furthermore, the logical mapping of the DBS entities on the DBS devices can be different in each scheduler, making the bias even less significant.

### F.2 Two-way DBS

A simple extension of the one-way DBS scheme is to provide a duplex communication path between neighbour DBS devices, and to inverse the direction flow of the TSS values at each scheduling rotation. Thus, it will be no more the case that one destination node can make its source-selections before another destination node on almost all the tandem nodes (when M is relatively small with respect to N). Instead, for each pair of destination node, half of the time one destination node has priority over the other destination node, and half of the time it is the inverse.

More M is large, more the destination node ordering perturbation can approximate a completely random perturbation, and a perfect approximation can be achieved with M greater than or equal to N/3 (i.e., with one, two or three DBS devices per class of service). For a smaller value of M, because there is more than 3 DBS devices (per class of service) and because the transfer of the TSS values follow a strict order of the DBS devices, the destination nodes associated with a DBS device makes always their source-selections after the destination nodes associated with the DBS device at its left, on N-M tandem nodes, for half of the rotation, and after the destination nodes associated with the DBS device at its right, as well on N-M tandem nodes, for the other half of the rotation. This ordering scheme results in a bias, which is more significant when M is relatively small compare to N.

For instance, suppose M = 1 and N = 256, and that a source-node x has a large number of IUs queue for destination node 0, destination node 1 and destination node 2, and has IUs only for these three destination nodes, and no other source nodes has IUs queued for these three destination nodes. Suppose furthermore that the DBS device responsible of destination node 0 is just at the left (following the TSS value flow in the right direction) of the DBS device responsible for the destination node 1, which is just at the left of the DBS device responsible for the destination node 2. In that case, half of the time the DBS device for destination node 0 is always selecting the source node x on all the tandem nodes before the DBS device for destination node 1 and destination node 2, excepted for two tandem nodes per rotation. The other half of the time, the DBS device of the destination node 2 is always selecting the source node x on all tandem nodes before the DBS devices for destination node 1 and destination node 0, excepted for two tandem nodes per rotation. That is, the bandwidth for the point of view of source node x will not be totally fairly distributed, even if it is fairly distributed between destination nodes 0 and 2.

Notice that the probability of bias is much less likely in the case of the two-way DBS scheme than in the case of the one-way DBS scheme.

In the case of the DBS_7 algorithm, a similar bias exists. However, since each DBS entity is less complex in that case, much more DBS entities can share the same DBS device, making M larger, making the bias much less likely. Furthermore, the logical mapping of the DBS entities on the DBS devices can be different in each scheduler, making the bias even less significant.

### F.3 H-way DBS

The extension from the one-way DBS scheme to the two-way DBS scheme can be further extended for an H-way DBS scheme which can be practically implemented when H = (N/M - 1) is sufficiently small. In the case where the DBS devices can be fully mesh connected, it is possible to make the TSS value flowing though the DBS devices following a different order at each scheduling rotation. Combining with the local random ordering of the destination node in each DBS device, this scheme permits to obtain a totally random scheme for ordering the destination nodes.

One way to implement the cross-connect is to use a demand-driven space switch between all the DBS devices, in which only a subset of the configuration are needed, the configuration being generated randomly for each scheduling rotation.

### F.4 M-pass DBS

Another scheme to perturbate the destination node ordering is to combine an H-way scheme (for H = 1, 2, ...), with an M-pass scheme. In a M-pass DBS scheme, a tandem node is scheduled by all the destination nodes using multiple passes of the tandem node through the DBS devices implementing the DBS entities.

For each scheduling rotation, each destination node select randomly, for each tandem node, during which pass of this tandem node the destination node will make its source-selections on.

More M is large, better the approximation of the random perturbation is obtained. The number of passes M is dependant on the effective latency to transfer the TSS values between DBS devices.

### G. DBS algorithm extension for demand-driven space switch architecture

In the following, we argue that, besides the fixed transport delay, the functionality of the rotator switch architecture with double-bank tandem nodes is identical with the functionality of an input-buffer demand-driven space-switch architecture; thus, the same schedulers and implementations proposed for this rotator switch architecture can be used for the demand space-switch architecture.

In the demand-driven space-switch architecture, the IUs are queued in the source nodes, as in the rotator switch architecture. The switch fabric is a demand-driven space-switch that can be configured dynamically in any one-to-one mapping between the source nodes and the destination nodes. The IUs data flow for this architecture is composed of an infinite sequence of bursts; for each burst the demand-driven space switch is reconfigured, and each source node can send IUs to the connected destination node. Usually, the duration of each burst is the same, which corresponds to the time of sending a given number of IUs, say L. The configuration at each burst is demand-driven to increase the throughput of the switch fabric. We assume first that L = 1, which permits to achieve the best performance with a demand-driven space-switch architecture, yet which is not really practical because of the delay penalty involve to reconfigure the space switch.

As in the case of the rotator switch, the switch fabric can be composed of many parallel demand-driven space-switches, where each one can be configured independently.

A configuration in the case of the demand-driven space switch corresponds with a tandem node rotation in the case of the rotator switch with double-bank tandem nodes, when K = 1. In general, the tandem node can implement K different configurations of a demand-driven space switch during each rotation. Without loss of generality, we suppose K = 1 in the following.

Hence, during each rotation, a tandem node can implement any one-to-one connection mapping between the source nodes and the destination nodes. The only difference with the demand-driven space-switch resides in the fact that the one-to-one connection mapping implemented by the tandem node is spread in time, during two rotations: during the first rotation, at each phase, the connected source node sends to the tandem node an IU for the destination node the source node is mapped with, while during the second rotation, at each phase, the tandem node sends to the connected destination node the IU that was previously sent by the source node the destination node is mapped with. In fact, at each rotation, the tandem node implements the half of two (different) one-to-one connection mappings.

Many tandem nodes are used each tandem node implements a space-switch of capacity 1/N, yet all tandem nodes can implement different one-to-one connection mappings. In fact, the N tandem nodes implements a N-stage pipeline architecture of a demand-driven space switch.

Since a tandem node rotation implements a one-to-one mapping of a demand-driven space switch, the set of source-selections on a tandem node, one for each destination node, as computed by the DBS algorithm for a target rotation of this tandem node, can be used directly to configure the demand-driven space-switch for a given burst.

To use directly the proposed DBS algorithms, as well as the corresponding implementations, for the demand-driven space-switch architecture, it is sufficient to map each tandem node rotation to a burst of the demand-driven space switch.

Assuming there is N tandem nodes, then the source-selections for the rotation R of the tandem node t can be used directly for the configuration of the demand-driven space switch for the burst NR+t.

Thus, the proposed DBS_6 algorithm, together with the proposed implementations for destination node ordering perturbation, can be used directly as the scheduler for a demand-driven space switch architecture.

Furthermore, the DBS_7 algorithm can be used as well to distribute the load amongst many schedulers for error protection purpose, in particular, in the case of an architecture with parallel demand-driven space-switches.

The proposed DBS algorithms can be used directly for the case of a demand-space switch architecture with burst length L of 1 IU. For the case L > 1, it possible to use as well directly the proposed DBS algorithms, assuming that the source nodes are making requests to the scheduler for group of L IUs for each combination of destination node and class of service.

In one scheme, a source node makes a request to the scheduler for transferring one IU to a specified destination node as soon as possible, even if it has not yet a group of L IUs ready to be sent for this destination node. Then, the source node will refrain making another request to the scheduler for the same destination node until it receives L more IUs for this destination node, unless the source node has been granted to send IUs to this destination node without having L IUs to sent. This scheme minimises the latency an IU can experience through the switch, yet the switch throughput is not optimised since less than L IUs may be transferred per burst.

In another scheme, a source node makes a request to the scheduler for transferring one IU to a specified destination node only for each group of L IUs received for this destination node. This scheme optimises the switch throughput, yet the latency an IU can experience through the switch is not optimised, since an IU must wait for L-1 other companions before the scheduler is informed of its presence at the source node. A time-out counter can be used to guarantee a maximum waiting period to optimise as well the latency.

Thus, the proposed DBS_6 and DBS_7 algorithm, together with the proposed implementations for destination node ordering perturbation, can be used directly as the scheduler for a demand-driven space switch architecture.

### H. Fault Tolerant Switch Architecture

We have already described an S-degree load-sharing variant of the destination-based scheduling algorithm as a mean to increase the fault tolerance of the architecture with respect to the scheduler fault as well as with respect to the part of the switch fabric (tandem nodes, space switch) the scheduler is responsible for (S= 1, ..., N). That is, if either the scheduler or its associated fabric part become faulty, both of them can be disable, resulting in a lost in capacity of C/S, where C is the fault-free capacity of the switch.

Furthermore, because the scheduler is the entity deciding by which physical path each IU is travelling through the switch fabric from its source node to its target destination node, it is possible to make the architecture even more fault tolerant by informing the scheduler about each faulty physical path discovered in the switch fabric.

For instance, in the case of the rotator switch, a bit-vector can be associated with each tandem node having a bit-value associated with each source node, such that the bit is set only if the physical connection from the associated source node to the tandem node is known to be fault free. A similar bit-vector can be associated with each tandem node for the destination nodes. Using these masking tables, the scheduling algorithm can be easily extended to avoid IU travelling through a faulty path.

On the one hand, when the TDS value of a given tandem node is updated (e.g., line 4 of the DBS_7 function), the entry corresponding to a destination node y for which the connection is faulty with the tandem node z is not reset to 0, but it is set to K instead (only in the case of the TDS value for the class 1 source-selections). This guarantees that a destination node will never selects a source node for sending an IU to a tandem node for which a known faulty connection between the tandem node and the destination node.

On the other hand, when the TSS value of a given tandem node is updated (e.g., line 7 of the DBS_7 function), the entry corresponding to a source node x for which the connection is faulty with tandem node z is not reset to 0, but it is set to K instead (only in the case of the TSS value for the class 1 source-selections). This guarantees that a source node will never be grant for sending an IU to a tandem node over a known faulty connection.

The same masking tables can be used as well for a demand-driven space-switch architecture.

The relation between the physical links and the logical links, either in the rotator switch architecture or in the demand-driven space switch architecture, is implementation dependant.

Furthermore, the DBS scheduler can be used to detect the faulty logical links. Assuming that the switch fabric provide some bandwidth expansion with respect to the user traffic, the DBS scheduler can scheduled a deterministic background traffic, using only a part of the switch fabric bandwidth expansion. The purpose of the background traffic is to traverse all the possible logical path from the source nodes to the destination nodes. Since the traffic is deterministic, any IU which does not arrive at a destination node can be flag as missing to the scheduler (e.g., via the request communication path), permitting the scheduler to mark as faulty the logical link corresponding with the missing IU.

The above scheme permits to obtain a fault-tolerant switch architecture, where faulty logical links are automatically and efficiently detected,permitting the scheduler to avoid scheduling transfer of user data IUs over the faulty links. Furthermore, since the background deterministic traffic can always be scheduled, regardless of the links status, the same scheme permits to detect automatically and efficiently the fix of a faulty logical link.

## Claims

1. In a switch for transferring information units and having a plurality of source nodes and destination nodes and selectable connectivity therebetween, a method of scheduling transfer of an information unit from a source node via a shared link to a desired destination node, said method comprising the steps of:
determining availability of a destination node;
determining demand for connection from each source node to the destination node;
determining availability of each source node; and
selecting an available source node in dependence upon the availability of and demand for the destination node.

2. In a switch for transferring information units and having a plurality of source nodes and destination nodes and selectable connectivity therebetween, a method of scheduling transfer of an information unit from a source node via a shared link to a desired destination node, said method comprising the steps of:
determining availability of a destination node;
determining a class of traffic being scheduled;
determining demand for connection from each source node to the destination node;
determining availability of each source node; and
selecting an available source node in dependence upon the availability of and demand for the destination node and the class of traffic.

3. In a switch for transferring information units and having a plurality of source nodes and destination nodes and selectable connectivity therebetween, a method of scheduling transfer of an information unit from a source node via a shared link to a desired destination node, said method comprising the steps of:
determining availability of a destination node;
determining age of traffic being scheduled;
determining demand for connection from each source node to the destination node;
determining availability of each source node; and
selecting an available source node in dependence upon the availability of and demand for the destination node and age of traffic.

4. In a switch for transferring information units and having a plurality of source node, double-bank tandem nodes and destination nodes and selectable connectivity therebetween, a method of scheduling transfer of an information unit from a source node to a tandem node for a desired destination node, said method comprising the steps of:
determining availability of a tandem node for a destination node;
determining a class of traffic being scheduled;
determining demand for connection from each source node to the destination node;
determining availability of each source node; and
selecting an available source node in dependence upon the availability of the tandem node for the destination node, and demand for the destination node and the class of traffic.

5. In a switch for transferring information units and having a plurality of source node, double-bank tandem nodes and destination nodes and selectable connectivity therebetween, a method of scheduling transfer of an information unit from a source node to a tandem node for a desired destination node, said method comprising the steps of:
determining availability of a tandem node for a destination node;
determining an age group of traffic being scheduled;
determining demand for connection from each source node to the destination node;
determining availability of each source node; and
selecting a source node in dependence upon availability of the tandem node for the destination node, and demand for the destination node and the age group.

6. In a rotator switch for transferring information units and having a plurality of source node, tandem nodes and destination nodes and selectable connectivity therebetween, a method of scheduling transfer of an information unit from a source node to a tandem node for a desired destination node, said method comprising the steps of:
determining availability of a tandem node for a destination node;
determining demand for connection from each source node to the destination node;
determining availability of each source node; and
selecting an available source node in dependence upon the availability of the tandem node for the destination node and demand for the destination node.

7. In a rotator switch for transferring information units and having a plurality of source node, tandem nodes and destination nodes and selectable connectivity therebetween, a method of scheduling transfer of an information unit from a source node to a tandem node for a desired destination node, said method comprising the steps of:
determining availability of a tandem node for a destination node;
determining a class of traffic being scheduled;
determining demand for connection from each source node to the destination node;
determining availability of each source node; and
selecting an available source node in dependence upon the availability of the tandem node for the destination node, and demand for the destination node and the class of traffic.

8. In a rotator switch for transferring information units and having a plurality of source node, tandem nodes and destination nodes and selectable connectivity therebetween, a method of scheduling transfer of an information unit from a source node to a tandem node for a desired destination node, said method comprising the steps of:
determining availability of a tandem node for a destination node;
determining an age group of traffic being scheduled;
determining demand for connection from each source node to the destination node;
determining availability of each source node; and
selecting a source node in dependence upon availability of the tandem node for the destination node, and demand for the destination node and the age group.

9. A method as claimed in any one of claims 6 to 8 wherein the tandem nodes are double-bank tandem nodes.

10. A method as claimed in any one of claims 1 to 9 wherein the step of selecting includes scanning the source nodes in round-robin fashion until one requesting the desired destination node is found.

11. A method as claimed in any one of claims 1 to 9 wherein the step of determining availability of a destination node considers the destination nodes in random order.

12. A method as claimed in any one of claims 1 to 3 wherein the step of determining demand for connection considers a portion of the demand associated with the shared link and the time interval during which the connection will use the shared link.

13. A method as claimed in any one of claims 1 to 3 wherein the step of determining availability of a destination node considers a known faulty shared link as not available for supporting the connection with the destination node, wherein the step of determining availability of a source node considers a known faulty shared link as not available for supporting the connection with the source node, the method further comprising the step of periodically probing the status of each shared link by deterministically scheduling transfer of a background information unit via the shared link.

14. A method as claimed in any one of claims 4 to 9 wherein the step of determining demand for connection considers a portion of the demand associated with the tandem node.

15. A method as claimed in any one of claims 4 to 9 wherein the step of determining availability of a tandem node considers a known faulty link from the tandem node to the destination node as not available for supporting the connection with the destination node, wherein the step of determining availability of a source node considers a known faulty link from the source node to the tandem node as not available for supporting the connection with the source node, the method further comprising the step of periodically probing the status of each link with the tandem node by deterministically scheduling transfer of a background information unit via the link.

16. A switch for transferring information units for operation according to a method claimed in any one of the preceding claims.
